# EUROPEAN PATENT APPLICATION

(11) **EP 4 635 610 A1**
(43) Date of publication of application: **22.10.2025**
(21) Application number: 23903339.2
(22) Date of filing: 04.12.2023
(51) Int. Cl.: B01D 65/02, B01D 65/08, C02F 1/44, C02F 1/50

(54) **MEMBRANE TREATMENT METHOD AND BIOFOULING SUPPRESSION METHOD**

(30) Priority: 14.12.2022 JP 2022199195
(71) Applicant: Kurita Water Industries Ltd., Tokyo 164-0001 (JP)
(72) Inventor: SHIMPO, Chikako, Tokyo 164-0001 (JP); TAKAHASHI, Junichi, Tokyo 164-0001 (JP)
(74) Representative: D Young & Co LLP
(86) International application number: PCT/JP2023/043267
(87) International publication number: WO 2024/128050

(57) **Abstract**

The present invention provides a technique for endotoxin production inhibition in a water system, or a technique that satisfies both biofouling inhibition and endotoxin production inhibition. The present invention provides a membrane treatment method or a biofouling inhibition method in which a bonded halogen compound is caused to exist in a water system where gram-negative bacteria exist. The present invention provides an endotoxin production inhibition method in a water system in which a bonded halogen compound is caused to exist in the water system.

## Description

### Technical Field

The present invention relates to a membrane treatment method, a biofouling inhibition method, an endotoxin production inhibition method in water, and an endotoxin concentration reduction method in water.

### Background Art

Bacterial endotoxins are thought to cause decreased activity such as fever and blood glucose reduction upon entering the human body. Thus, it is desirable to suppress the endotoxin concentration to be as low as possible in treated water treated by a water system, especially in treated water (e.g., pure water, dialysis fluid, etc.) of a water treatment system as used for medical applications.

Generally, a membrane treatment is performed to suppress the endotoxin concentration. However, depending on the membrane condition and operation status, there are also cases where endotoxin cannot be suppressed to a target concentration or below, and an additional treatment such as a UV treatment may be necessary after the membrane treatment (e.g., Patent Document 1, Non-Patent Document 2).

In addition, it is common to use a slime inhibitor and the like to inhibit biofouling in a water treatment apparatus or a system for a membrane treatment and the like. However, it is also known that, when using a slime inhibitor such as chlorine (sodium hypochlorite) to exert a biofouling inhibition effect in a water system, endotoxin is also produced or generated in the water system, resulting in existence of endotoxin in the water system (e.g., Non-Patent Document 1).

### Related Art Documents

### Patent Documents

Patent Document 1: WO2020/004272
Patent Document 2: WO2011/125762

### Non-Patent Documents

Non-Patent Document 1: Huang Huang et al., "Effect of chlorination on endotoxin activities in secondary sewage effluent and typical Gram-negative bacteria", WATER RESEARCH 45 (2011) 4751-4757.
Non-Patent Document 2: Kenichi Ono et al., "Effects of the membrane pressure of reverse osmosis device against the concentration of endotoxin in the reverse osmosis water", Journal of Japanese Society for Dialysis Therapy 35(5):281-286, 2002
Non-Patent Document 3: J. S. Vrouwenvelder et. al., "Biofouling of Spiral Wound Membrane Systems", IWA Publishing (2011).
Non-Patent Document 4: Wataru Suda et al., "High-throughput sequencing analysis of environmental microbiome", Biseibutsu Seitai 27(2) 63-39, 2012

### SUMMARY OF INVENTION

### Problem to Be Solved by Invention

Thus, a main objective of the present invention is to provide a technique for endotoxin production inhibition in a water system, or a technique that satisfies both biofouling inhibition and endotoxin production inhibition.

### Means for Solving Problem

As a result of intensive research, the present inventors have newly found a technique for endotoxin production inhibition in a water system, and a technique that satisfies both biofouling inhibition and endotoxin production inhibition, by causing a bonded halogen compound (hereinafter also referred to as "the bonded halogen compound") produced using at least a halogen-based compound and a compound (hereinafter also referred to as "amino compound") having an amino group as a stabilizing compound to exist in a water system. The present invention is as follows.

The present invention provides a membrane treatment method or a biofouling inhibition method in which a bonded halogen compound produced using at least a halogen-based compound and an amino compound which is a stabilizing compound is caused to exist in a water system where gram-negative bacteria exist.

In addition, the present invention provides an endotoxin production inhibition method in a water system in which a bonded halogen compound produced using at least a halogen-based compound and an amino compound which is a stabilizing compound is caused to exist in the water system.

### Effects of Invention

According to the present invention, it is possible to provide a technique for endotoxin production inhibition in a water system, or a technique that satisfies both biofouling inhibition and endotoxin production inhibition.

### BRIEF DESCRIPTION OF THE DRAWINGS

[FIG. 1] is a schematic view showing an example of a water system of the present invention.
[FIG. 2] is a schematic view of a water treatment apparatus including MFS used in a water flow test of [Examples] of the present case, and the present embodiment is not limited thereto.

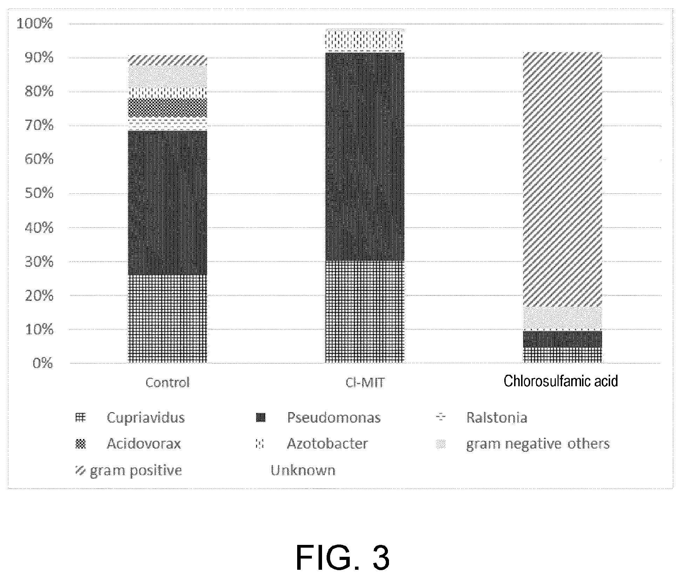

[FIG. 3] is a diagram showing an existence ratio of each bacterium in bacterial flora in a biofilm attached to a RO membrane surface after the water flow test of [Examples] of the present case. From the bottom are Cupriavidus, Pseudomonas, Ralstonia, Acidovorax, Azotobacter, gram negative others, gram positive, Unknown.
[FIG. 4] is a schematic view of a water treatment apparatus including MFS used in the water flow test of [Examples] of the present case, and the present embodiment is not limited thereto.

### EMBODIMENTS FOR IMPLEMENTING INVENTION

Hereinafter, embodiments for implementing the present invention will be described. The embodiments described below show examples of representative embodiments of the present invention, and the scope of the present invention should not be interpreted as being limited thereby. In numerical values, an upper limit value (or less) and a lower limit value (or more) may be combined in any manner as desired. In addition, in the present embodiment, for example, an action such as "adjust (adjustment)" may be taken as a "process" or a "step", a "step" may be taken as an action or a "process", or a "process" may be taken as an action or a "step". In addition, in the present embodiment, a "process", a "means", and a "mechanism" may be taken as a system, an apparatus, a part, or a method, and vice versa, and an "apparatus" may be taken as a system, a means, a mechanism, or a part, and vice versa. In addition, a "part" may be taken as a part or an apparatus to be included in a mechanism, an apparatus, a means, a system, etc., and vice versa.

### 1. Membrane treatment method and biofouling inhibition method according to present invention

In the description of the method in the present embodiment, descriptions of each configuration and each method, such as a water system, a membrane treatment, biofouling inhibition, endotoxin production inhibition, a drug, etc., that overlap with "2." and the like to be described later will be appropriately omitted, but the descriptions of "2." and the like also apply to the present embodiment and may be appropriately adopted.

Conventionally, inorganic bonded chlorine such as chloramine, DBNPA (2,2-dibromo-3-nitrilopropionamide), an isothiazoline-based organic slime inhibitor, etc. have been widely used as a slime inhibitor of a water treatment system. However, among them, when used for a long period, drug-resistant bacteria may proliferate. Gram-negative bacteria often become dominant as resistant bacteria, resulting in discharge of endotoxin derived therefrom.

In addition, conventionally, in a water system where gram-negative bacteria exist, there has been a problem that if a biofouling inhibitor is added to the water system, the amount of endotoxin in the water system increases. For example, as shown in [Examples] to be described later, with Cl-MIT alone, which is a type of organic slime inhibitor, or with chloramine (mono, di, tri) alone, which is a type of bonded halogen compound commonly used for disinfection of tap water and pools, or, as described in Non-Patent Document 1, with sodium hypochlorite, which is a type of chlorine-based oxidizing agent with strong bactericidal power, although gram-negative bacteria in the water system can be inhibited and biofouling can be inhibited, the effect of endotoxin production inhibition is not achieved.

Thus, the present inventors focus on the relationship between endotoxin concentration suppression and biofouling inhibition in a water system, and the existence ratio of gram-negative bacteria in the bacterial flora which is a cause of endotoxin generation and a cause of concentration increase, and has conducted research on compounds capable of biofouling inhibition and methods of use.

As a result of intensive research, the present inventors have found that by causing a bonded halogen compound produced using at least a halogen-based compound and an amino compound as a stabilizing compound, or a bonded halogen compound (the bonded halogen compound) with a molecular weight of 60 or more, to exist in a water system, endotoxin production inhibition, and, endotoxin production inhibition and biofouling inhibition can be achieved. Moreover, an excellent advantage of the bonded halogen compound lies in that, by using the bonded halogen compound even when existence of gram-negative bacteria in the water system is high, endotoxin production inhibition, and, endotoxin production inhibition and biofouling inhibition can be achieved. That is, by causing the bonded halogen compound to exist in the water system, it is also possible to reduce the endotoxin concentration in the water system. Furthermore, the present inventors have found that, if the bonded halogen compound is caused to exist in the water system, since the dominant existence ratio of gram-negative bacteria in the water system can be suppressed, there is an advantage that endotoxin production inhibition can also be easily achieved, and the state of bacterial flora in the water system and the endotoxin concentration in the water system can also be controlled.

In addition, as a result of intensive research, the present inventors have found that, if a bonded halogen compound of a stabilizing compound having an amino group, such as sulfamic acid, and a halogen-based compound is added to a water system containing gram-negative bacteria as a biofouling inhibitor or an endotoxin production inhibitor, an effect in inhibiting growth of a biofilm is shown and the existence ratio (proportion) of gram-negative bacteria in the biofilm can be suppressed, and also, the generation amount or the production amount of endotoxin can be suppressed.

Furthermore, the present inventors have found that, when a bonded halogen of a stabilizing amino compound such as sulfamic acid and a halogen-based compound, or a drug containing the same, is added to a water system (suitably a water treatment system) as a biofilm inhibitor at a concentration capable of suppressing growth of a biofilm, the endotoxin generation amount can be suppressed to 50% or less compared to a general biofouling inhibition method involving chloramine, DBNPA, isothiazoline, etc.

Thus, as a result of intensive research, the present inventors have found that, by causing a bonded halogen compound produced using at least a halogen-based compound and a stabilizing amino compound to exist in a water system, both endotoxin production inhibition or concentration suppression and biofouling inhibition in the water system can be achieved. Furthermore, the present inventors have also found that even in a water system where gram-negative bacteria are dominant, with the bonded halogen compound existing in the water system, there is an excellent advantage that endotoxin production inhibition can be achieved, and biofouling inhibition can also be achieved.

Furthermore, the present inventors have found that the content or use (timing, period, amount, total halogen concentration, etc.) of the bonded halogen compound in the water system can be determined by taking, as an indicator, one or two or more selected from the type of gram-negative bacteria, the number of gram-negative bacteria, and the existence ratio of gram-negative bacteria in the bacterial flora, and that Pseudomonas genus bacteria and/or Cupriavidus genus bacteria can be used as indicators.

Furthermore, the present inventors have found that although the endotoxin production inhibition effect cannot be obtained with an organic slime inhibitor alone, when containing or using the organic slime inhibitor in a water system, by intermittently containing or using the bonded halogen compound (e.g., adding for 1 to 0.25 hours during a day) in the water system, the endotoxin production amount can be reduced to approximately half or less of that of using the organic slime inhibitor alone, which is close to the endotoxin production inhibition effect of continuous addition of the bonded halogen compound alone.

Furthermore, the present inventors have found that, by using the bonded halogen compound in a water system, the endotoxin concentration is kept low before a membrane treatment, which can simplify a downstream treatment, reduce a load, or further suppress the endotoxin concentration in a final process, and can enable production of treated water with an endotoxin concentration reduced.

Thus, the present embodiment can provide a membrane treatment method or a biofouling inhibition method in which a bonded halogen compound produced using at least a halogen-based compound and an amino compound as a stabilizing compound, or a bonded halogen compound with a molecular weight of 60 or more, is caused to exist in a water system, and at this time, production of endotoxin in the water system can also be inhibited using the bonded halogen compound. In addition, the present embodiment can also provide a membrane treatment method accompanied by biofouling inhibition or biofilm formation inhibition.

The present embodiment can provide an endotoxin production inhibition method in which the bonded halogen compound is caused to exist in a water system. In addition, the present embodiment may be an endotoxin production inhibition method or an endotoxin concentration reduction method, or may be a method of producing or generating treated water with endotoxin production inhibited or an endotoxin concentration reduced.

The bonded halogen compound is suitably a compound produced using at least a halogen-based compound and a stabilizing compound (suitably an amino compound), may be a compound produced by addition of a single-liquid drug or a multi-agent drug to a water system, may be a compound produced by adding a halogen-based compound and/or a stabilizing compound to a water system at the same time or at different times, or may be a compound produced by utilizing a halogen-based compound or a stabilizing compound existing in the water system and further adding a halogen-based compound and/or a stabilizing compound. In addition, although not particularly limited, the water system to be utilized may also be applied to a system containing a halogen-based compound or an amino compound derived from raw water or derived from a process, or may also be a water system in which either is introduced.

Furthermore, in the present embodiment, since both biofouling inhibition and endotoxin production inhibition can be achieved, it is possible to provide a method for biofouling inhibition and endotoxin production inhibition in a water system, and a method for gram-negative bacteria proliferation inhibition and biofouling inhibition in a water system, and it may also be a method of producing or generating treated water with endotoxin production inhibited or an endotoxin concentration reduced by a membrane treatment.

The present embodiment can provide a membrane treatment method or a biofouling inhibition method in which a drug containing a bonded halogen compound produced using at least a halogen-based compound and an amino compound as a stabilizing compound, or a bonded halogen compound with a molecular weight of 60 or more, is added to a water system.

In addition, the present embodiment can also provide a membrane treatment method or a biofouling inhibition method in which a bonded halogen compound produced using at least a halogen-based compound and/or a stabilizing compound is caused to exist in a water system.

The present embodiment can also provide a membrane treatment method or a biofouling inhibition method in which, in a water system containing a halogen-based compound or an amino compound derived from raw water or derived from a process, a bonded halogen compound is produced using a halogen-based compound and/or a stabilizing compound, and the bonded halogen compound is caused to exist in the water system.

In the present embodiment, suitably, a total halogen concentration in the water system is adjusted to a specific concentration (suitably 0.01 to 100 mg/L), and/or the water system is adjusted to a specific total halogen concentration (suitably 0.01 to 100 mg/L).

In the present embodiment, suitably, the bonded halogen compound in the water system or in the drug is produced by adjusting a molar ratio (stabilizing compound/halogen-based compound) of the halogen-based compound and the stabilizing compound to 1.0 or more.

In the present embodiment, suitably, use (timing of use, period of use, existence amount, total halogen concentration, etc.) of the bonded halogen compound is determined by taking, as an indicator, one or two or more selected from the type of gram-negative bacteria, the number of gram-negative bacteria, and the existence ratio of gram-negative bacteria in the bacterial flora.

In the present embodiment, the water system is suitably a water system in which gram-negative bacteria exist, and is suitably a water treatment system, and more suitably a membrane treatment system. Although not particularly limited, examples of the water system include: a water treatment water system; a circulating water system such as a cooling tower; a process water system such as in paper pulp manufacturing, a water supply system, a wastewater recovery system, etc. The water system is suitably a water treatment system, and more suitably, the water treatment system is a water system or a water treatment system that includes a membrane treatment system or a membrane treatment apparatus. The water system is suitably a water system that includes a membrane treatment system including a membrane treatment apparatus.

In the present embodiment, by including or using the bonded halogen compound in the water system, it is possible to provide a technique for better endotoxin production inhibition in the water system, and also, it is possible to provide a technique that satisfies both better endotoxin production inhibition and biofouling inhibition in the water system. Furthermore, in the present embodiment, it is possible to obtain more appropriate usage efficiency and usage cost reduction effects, more appropriate endotoxin production inhibition effect, biofouling inhibition effect, etc. in the water system.

### 1-1. Bonded halogen compound

The bonded halogen compound used in the present embodiment is suitably a compound produced using at least a halogen-based compound and a stabilizing compound (suitably an amino compound), or a compound with a molecular weight of 60 or more. The bonded halogen compound is suitably a compound produced using at least a halogen-based compound and a stabilizing compound (suitably a stabilizing amino compound). In addition, examples of the bonded halogen compound include one or two or more selected from a bonded chlorine compound (also called a bonded chlorine agent, a stabilizing chlorine agent), a stabilizing bromide (also called a bonded bromine agent, a stabilizing bromine agent), etc., but is not limited thereto. Among these, a chlorine-based sulfamic acid compound and/or a bromine-based sulfamic acid compound are preferable as a suitable bonded halogen compound. The chlorine-based sulfamic acid compound may be produced from, for example, a chlorine-based oxide (e.g., sodium hypochlorite) and a sulfamic acid compound (e.g., sulfamic acid) under a condition of pH 11 or higher. The bromine-based sulfamic acid compound may be produced from, for example, a bromine-based oxide (e.g., liquid bromine) and a sulfamic acid compound (e.g., sulfamic acid) under a condition of pH 11 or higher. The molecular weight may be calculated by a sum of the atomic weights contained in the molecule. Although the molecular weight of the bonded halogen compound is not particularly limited, a suitable lower limit value is a molecular weight of 60 or more, and a suitable upper limit value is not particularly restricted and may be 1,000 or less or 500 or less. The bonded halogen compound or the drug containing the compound may be a commercially available product or may be obtained according to a conventional production method.

The bonded halogen compound or the drug containing the compound is suitably produced using at least a halogen-based compound and a stabilizing compound. The bonded halogen compound may be a bonded halogen compound (e.g., stabilizing bromide) produced using a halogen-based compound, a stabilizing amino compound, and further a stabilizing bromide, as described later in <stabilizing bromide>. In addition, the bonded halogen compound may be produced by utilizing or using a halogen-based compound or a stabilizing compound existing in the water system, and further adding or mixing a halogen-based compound and/or a stabilizing compound to the water system.

In addition, the bonded halogen compound is suitably produced by further using a halogen-based compound and/or a stabilizing compound, in a water system or water containing a halogen-based compound or an amino compound derived from raw water or derived from a process. "Derived from raw water" may refer to raw water or treated water introduced as raw water, and "derived from a process" may refer to process water treated in each treatment process, and more suitably, is a water system derived from raw water or derived from a process containing a halogen-based compound or a stabilizing compound (suitably an amino compound).

In addition, the halogen-based compound and the stabilizing compound used in the present embodiment may be used directly, or may be used as drugs respectively. The halogen-based compound and the stabilizing compound used in the present embodiment may be respectively used as a halogen-based oxidizing agent and a stabilizer, or may be respectively used as a drug containing a halogen-based compound or a halogen-based oxidizing agent, and a drug containing a stabilizing compound or a stabilizer.

### 1-1-1. Halogen-based compound

Examples of the halogen-based compound used in the present embodiment include one or two or more selected from a chlorine-based oxide, a bromine-based oxide, etc. The chlorine-based oxide and the bromine-based oxide may respectively be a chlorine-based oxidizing agent and a bromine-based oxidizing agent. For the bromine-based oxide, descriptions in <stabilizing bromide> may be appropriately adopted.

Although not particularly limited, examples of the chlorine-based oxide include chlorine gas, chlorine dioxide, hypochlorous acid or a salt thereof, chlorous acid or a salt thereof, chloric acid or a salt thereof, perchloric acid or a salt thereof, chlorinated isocyanuric acid or a salt thereof, etc., and one or two or more selected from these may be used, among which hypochlorite is suitable.

Examples of hypochlorite include alkali metal hypochlorite such as sodium hypochlorite, potassium hypochlorite, etc.; alkaline earth metal hypochlorite such as calcium hypochlorite, barium hypochlorite, etc., and one or two or more selected from these may be used.

Examples of chlorite include alkali metal chlorite such as sodium chlorite, potassium chlorite, etc.; alkaline earth metal chlorite such as barium chlorite; other metal chlorite such as nickel chlorite, etc., and one or two or more selected from these may be used.

Examples of chlorate include ammonium chlorate; alkali metal chlorate such as sodium chlorate, potassium chlorate, etc.; alkaline earth metal chlorate such as calcium chlorate, barium chlorate, etc., and one or two or more selected from these may be used.

Examples of perchlorate include sodium perchlorate, potassium perchlorate, etc., and one or two or more selected from these may be used.

Examples of chlorinated isocyanurate include sodium chlorinated isocyanurate and the like, and one or two or more selected from these may be used.

Although not particularly limited, examples of the bromine-based oxide include bromine (liquid bromine), bromine chloride, bromic acid, bromate, hypobromous acid, etc., and one or two or more selected from these may be used.

### 1-1-2. Stabilizing compound

The stabilizing compound used in the present embodiment is not particularly limited, is suitably a compound capable of reacting with a halogen-based compound to produce a bonded halogen compound, and is also referred to as a stabilizer. Examples of the suitable stabilizing compound include a compound (hereinafter also referred to as "stabilizing amino compound") having an amino group such as a sulfamic acid compound, and the like, and one or two or more selected from these may be used.

In the present embodiment, a monovalent functional group (-NHH, -NHR, -NRR') obtained by removing hydrogen from a primary amine or a secondary amine is referred to as an "amino group", which is distinguished from ammonia (or a salt thereof), and the compound (hereinafter also referred to as "amino compound") having an amino group used in the present embodiment may have one or multiple amino groups and may be heterocyclic.

### <Amino compound>

Examples of the amino compound used in the present embodiment include an organic amino compound such as primary amine (R-NH₂) such as urea, acid amide (RCONH₂) such as amino acid, sulfonamide (RSO₂NH₂ (where R is a hydrocarbon residue and the like)), a heterocyclic compound having an amino group such as hydantoin; an inorganic amino compound such as hydroxylamine (NH₂OH), hydrazine (NH₂NH₂), etc. Examples of sulfonamide include sulfamic acid, 4-sulfamoylbenzoic acid, carbamic acid, methanesulfonamide, etc.; examples of amino acid include glycine and the like. Hydantoin structurally corresponds to a cyclic condensate of glycolic acid and urea.

In addition, the amino compound is suitably a sulfur-containing amino compound (suitably with a molecular weight of 20 or more, and/or suitably with a molecular weight of 400 or 300, 200 or less) such as a sulfamic acid compound, a sulfamoylbenzoic acid compound, etc. One or two or more selected from these amino compounds may be used.

### <Bonded halogen compound: Chlorosulfamic acid>

The sulfamic acid compound constituting the chlorosulfamic acid compound is suitably a compound represented by R¹R²NSO₃H ... [1]. In the general formula [1], suitably, R¹ and R² are each independently H, or an alkyl group having 1 to 8 carbon atoms or a functional group containing a benzene ring.

Examples of the sulfamic acid compound include: sulfamic acid (amidosulfuric acid) or a salt thereof in which both of the two R¹ group and R² group are hydrogen atoms; sulfamic acid or a salt thereof in which one of the two R¹ group and R² group is a hydrogen atom and the other is an alkyl group having 1 to 8 carbon atoms, such as N-methylsulfamic acid, N-ethylsulfamic acid, N-propylsulfamic acid, N-isopropylsulfamic acid, N-butylsulfamic acid, etc.; sulfamic acid or a salt thereof in which both of the two R¹ group and R² group are alkyl groups having 1 to 8 carbon atoms, such as N,N-dimethylsulfamic acid, N,N-diethylsulfamic acid, N,N-dipropylsulfamic acid, N,N-dibutylsulfamic acid, N-methyl-N-ethylsulfamic acid, N-methyl-N-propylsulfamic acid, etc., but are not limited thereto. One or two or more selected from these may be used.

Examples of a production example of the chloramine compound include a method of mixing an aqueous solution of a stabilizer (e.g., an aqueous solution of a sulfamic acid compound and the like) with an aqueous solution of a chlorine-based oxide (e.g., a sodium hypochlorite solution and the like) in the presence of alkali, and the chloramine compound may be produced from at least a stabilizing compound and a chlorine-based oxide. The pH during production of the chloramine compound or the pH of a drug containing the produced chloramine compound is preferably 12 or higher, and more preferably 13 or higher. For example, as a production example of sodium chlorosulfamate, the method described in [Examples] of Patent Document 2 (WO2011/125762; Japanese Patent Publication No. 5720964) may be referred to.

Although not particularly limited, the usage ratio of the chlorine-based oxide and the stabilizing compound (e.g., sulfamic acid compound and the like) is that, with respect to 1 mole of the total chlorine concentration (Cl₂) of the chlorine-based halogen compound, the chlorine stabilizing compound (suitably sulfamic acid compound) is preferably 0.5 to 5.0 moles, more preferably 0.5 to 2.5 moles, and even more preferably 1.0 to 2.2 moles. This usage ratio may be the content ratio in the drug.

The sulfamic acid compound is more preferably sulfamic acid in the narrow sense where R¹ and R² are each H, but N-methylsulfamic acid, N,N-dimethylsulfamic acid, N-phenylsulfamic acid, chloramine T, etc. may also be used. The sulfamic acid compound may be used in the state of free (powdered) acid of these sulfamic acids, or may be a salt such as an alkali metal salt, such as sodium salt, potassium salt, lithium salt, etc. One or two or more selected from these may be used.

The chlorosulfamic acid refers to one in which at least one hydrogen atom of a NH₂ group included in sulfamic acid (H₂NSO₂OH) is substituted with a chlorine atom. Examples of the chlorosulfamic acid include monochlorosulfamic acid, dichlorosulfamic acid, etc.

The chlorosulfamate refers to one in which at least one hydrogen atom of an OH group included in sulfamic acid (H₂NSO₂OH) is substituted with a metal ion (e.g., alkali metal ion such as lithium ion, sodium ion, potassium ion, etc.).

Examples of the chlorosulfamate include lithium chlorosulfamate, sodium chlorosulfamate, potassium chlorosulfamate, etc., and one or two or more selected from these may be used. Among these, sodium chlorosulfamate is preferable.

In addition, as another chloramine compound, chloramine T and the like may be used. In addition, one or two or more selected from these may be used.

### <Stabilizing bromide>

The stabilizing bromide is suitably a compound having at least one bond (N-Br bond, C-Br bond) between a nitrogen atom or a carbon atom and a bromine atom, and corresponds to a bonded halogen compound. The stabilizing bromide suitably refers to a bromide in which changes due to decomposition and the like in water are less likely to occur, and the produced bromide can exist stably in water.

Examples of the stabilizing bromide include a reaction product of "reactant of a bromine-based oxide or a bromine compound and a chlorine-based oxide" and "a sulfamic acid compound (stabilizing amino compound)", but are not limited thereto. The pH during production of the reaction product or the pH of the reaction product is preferably alkaline, more preferably 11 or higher, even more preferably 12 or higher, and still more preferably 13 or higher. A commercially available product may be used, or one obtained according to a conventional production method may be used.

Although not particularly limited, examples of the bromine-based halogen compound include bromine (liquid bromine), bromine chloride, bromic acid, bromate, hypobromous acid, etc., and one or two or more selected from these may be used.

Although not particularly limited, examples of the bromine compound include an alkali metal bromide salt such as sodium bromide, potassium bromide, lithium bromide, etc., a bromide salt such as ammonium bromide, and hydrobromic acid, and one or two or more selected from these may be used.

Regarding the chlorine-based halogen compound (chlorine-based oxide (e.g., hypochlorite, chlorite, chlorate, perchlorate, chlorinated isocyanurate, etc.)) used in the stabilizing bromide, the descriptions of "chlorine-based compound (suitably chlorine-based oxide)" and the like of <chloramine compound> above apply thereto, and configurations described therein may be appropriately adopted. Among these, hypochlorite (e.g., sodium hypochlorite) is preferable.

Regarding "sulfamic acid compound", the descriptions of "sulfamic acid compound" in "The sulfamic acid compound constituting the chlorosulfamic acid compound is a compound represented by R¹R²NSO₃H ... [1]" above apply thereto, and configurations described therein may be appropriately adopted. Among "sulfamic acid compounds", sulfamic acid or a salt thereof is preferable.

Examples of a production example of the stabilizing bromide include a method of mixing a sodium bromide aqueous solution with sodium hypochlorite to form a mixed solution 1, mixing a sulfamic acid aqueous solution with a sodium hydroxide aqueous solution to form a mixed solution 2, and mixing the mixed solution 1 and the mixed solution 2 in the presence of alkali.

For example, bromamine composed of ammonium salt and bromine, or bromosulfamic acid, and bromosulfamate, and as another compound, DBNPA and the like, may be used.

### 1-1-3. Optional component

The drug containing the bonded halogen compound may appropriately include an optional component or an optional drug within a range that does not impair the effects of the present embodiment. Examples of the optional component or the optional drug include an anticorrosive agent (corrosion inhibitor), a scale inhibitor, a slime inhibitor, a solvent or a dispersion medium such as water, a dispersant enzyme, a bactericide, a defoaming agent, etc., but are not limited thereto, and various drugs capable of being generally used in a water system or water treatment may also be used. One or two or more of these optional components or optional drugs may be appropriately selected. In addition to the addition or use of the bonded halogen compound or a drug containing the same, an optional component or an optional drug may be further appropriately added or used separately.

### 1-1-4. Adjustment or production of the bonded halogen compound

### <Molar ratio of halogen-based compound and stabilizing compound>

The molar ratio (molar ratio of stabilizing compound (suitably an amino compound)/halogen-based compound) of the halogen-based compound and the stabilizing compound (suitably an amino compound) when producing the bonded halogen compound is not particularly limited, but a suitable lower limit value is preferably 0.5 or more, more preferably 1.0 or more, and a suitable upper limit value is preferably 5.0 or less, more preferably 2.2 or less, even more preferably 2.0 or less, and still more preferably 1.5 or less. The bonded halogen compound is suitably a compound produced by adjusting or mixing to become the molar ratio (more suitably 1.0 or more) of the stabilizing compound/halogen-based compound in the production of the drug or the water system. The molar ratio may be the molar ratio in the drug, or may be the molar ratio when used in the water system, and the mole of the halogen-based compound is suitably configured as 1 mole of the total chlorine concentration (Cl₂). As a production example, the method described in Patent Document 2 (WO2011/125762) may be referred to.

The pH of the reaction product or the drug containing the bonded halogen compound is preferably 12 or higher, more preferably 13 or higher. This pH may be the pH when producing the reaction product. This usage ratio may be the usage ratio when used in the water system, or may be the content ratio in the drug.

### 1-2. Organic slime inhibitor

An organic slime inhibitor in a water system is very likely to cause or promote endotoxin production. However, by also using the bonded halogen compound used in the present embodiment, it is possible to inhibit production or reduce a concentration of endotoxin when using an organic slime inhibitor. Furthermore, the use of the bonded halogen compound in the water system when used together with an organic slime inhibitor may be continuous or intermittent, and may be at the same time or at different times as the use of the organic slime inhibitor. In the present embodiment, the use of the bonded halogen compound when used together with the organic slime inhibitor has a very excellent effect of being capable of exerting effects such as endotoxin production inhibition, even with intermittent addition and addition within a relatively short period of time.

Although not particularly limited, examples of the organic slime inhibitor or the component (hereinafter also referred to as "organic slime inhibiting compound") include an isothiazoline compound, a halocyanoacetamide compound, an aldehyde compound, and an oxime compound represented by tetrazolyl oxime and dichloroglyoxime, and one or two or more of these may be used. In addition, the organic slime inhibitor may be a drug containing one or two or more compounds selected from these. The organic slime inhibitor or the compound used in the organic slime inhibitor may be a commercially available product, or may be one obtained according to a conventional method.

### <Isothiazoline compound>

Although not particularly limited, examples of the isothiazoline compound include 5-chloro-2-methyl-4-isothiazolin-3-one (Cl-MIT), 2-methyl-4-isothiazolin-3-one (MIT), 2-ethyl-4-isothiazolin-3-one, 2-n-octyl-4-isothiazolin-3-one, 5-chloro-2-ethyl-4-isothiazolin-3-one, 5-chloro-2-t-octyl-4-isothiazolin-3-one, 4,5-dichloro-2-n-octyl-4-isothiazolin-3-one, 4,5-dichloro-2-cyclohexyl-4-isothiazolin-3-one, etc., and one or two or more of these may be used. In addition, as the isothiazoline compound, a complex of the above isothiazoline compounds with magnesium chloride, magnesium nitrate, copper chloride, copper nitrate, calcium chloride, etc. may be used. One or two or more selected from these may be used.

Among the isothiazoline compounds, 5-chloro-2-methyl-4-isothiazolin-3-one (Cl-MIT), and 2-methyl-4-isothiazolin-3-one (MIT) or mixtures thereof are preferable, and more suitably, at least Cl-MIT is used.

### <Halocyanoacetamide compound>

Although not particularly limited, examples of the halocyanoacetamide compound include 2-halo-3-nitrilopropionamide such as 2-chloro-3-nitrilopropionamide, 2-bromo-3-nitrilopropionamide, etc.; 2,2-dihalo-3-nitrilopropionamide such as 2,2-dichloro-3-nitrilopropionamide, 2,2-dibromo-3-nitrilopropionamide (DBNPA), 2-chloro-2-bromo-3-nitrilopropionamide, etc.; N-C1-3alkyl-2-halo-3-nitrilopropionamide such as N-methyl-2-chloro-3-nitrilopropionamide, N-methyl-2-bromo-3-nitrilopropionamide, etc.; N-C1-3alkyl-2,2-dihalo-3-nitrilopropionamide such as N-methyl-2,2-dichloro-3-nitrilopropionamide, N-methyl-2,2-dibromo-3-nitrilopropionamide, etc., and one or two or more selected from these may be used.

The halocyanoacetamide compound may be a compound represented by NC-CX¹X²-(C=O)-NHR³ ... [2]. In the general formula [2], X¹ and X² each independently represent a halogen atom or a hydrogen atom, and at least one of X¹ and X² is a halogen atom. R³ represents a hydrogen atom or an alkyl group having 1 to 3 carbon atoms. Examples of the halogen atom include a chlorine atom and a bromine atom, and the bromine atom is preferable. The C1-3 alkyl may be either straight-chain or branched-chain, and examples include a methyl group, an ethyl group, a n-propyl group, an iso-propyl group, etc. One or two or more selected from these may be used.

Among the halocyanoacetamide compounds, dihalonitrilopropionamides are preferable, and among these, 2,2-dibromo-3-nitrilopropionamide (DBNPA) is more preferable.

### <Aldehyde compound>

Although not particularly limited, examples of the aldehyde compound include a monoaldehyde compound such as acetaldehyde; a dialdehyde compound such as glyoxal, orthophthalaldehyde, etc., and one or two or more selected from these may be used.

Among the aldehyde compounds, the dialdehyde compound is preferable, and among the dialdehyde compounds, glutaraldehyde is preferable from the viewpoint of high safety.

### <Oxime compound>

Although not particularly limited, examples of the oxime compound include an oxime compound (e.g., tetrazolyl oxime and the like) having a tetrazole ring (CH₂N₄), a halogenated oxime compound (e.g., dichloroglyoxime and the like), etc., and one or two or more selected from these may be used. The oxime compound is a compound having a structure represented by >C=N-OH in the molecule.

Examples of the oxime compound having a tetrazole ring include picarbutrazox (molecular formula: C₂₀H₂₃N₇O₃, molecular weight: 409.44, CAS No. 500207-04-5) and the like.

Examples of the halogenated oxime compound include dichloroglyoxime, α-chlorobenzaldoxime, α-chlorobenzaldoxime acetate, 4-hydroxyphenyl-α-ketoaceto hydroximic acid chloride (also known as Paraclox), etc., and one or two or more selected from these may be used.

Among the organic slime inhibitors, one or two or more selected from 2,2-dibromo-3-nitrilopropionamide (DBNPA), 5-chloro-2-methyl-4-isothiazolin-3-one (Cl-MIT), and 2-methyl-4-isothiazolin-3-one (MIT), or mixtures thereof, glutaraldehyde, etc. are preferable.

The organic slime inhibitor may appropriately include an optional component or an optional drug within a range that does not impair the effects of the present embodiment, and configurations and the like described in "1-1-3. Optional component" above may be appropriately adopted.

### 1-3. Existence, content, and use of the bonded halogen compound in water system

In the present embodiment, by causing the bonded halogen compound to exist in the water system or by adjusting the existence amount, endotoxin production inhibition and/or biofouling inhibition can be exerted, and the cost of drug used can be reduced. According to the method of the present embodiment, inhibition of endotoxin production or suppression of an increase in the endotoxin concentration in the treated water can also be achieved, such treated water can be obtained, and reduction of an endotoxin concentration in the treated water can also be achieved.

In the present embodiment, causing the bonded halogen compound to exist in the water system can be controlled, and accordingly, existence, production, or the existence amount of the bonded halogen compound in the water system can also be adjusted or controlled, and such adjustment or control may be executed by a control part.

In the present embodiment, by adjusting the existence amount and the like of the bonded halogen compound in the water system, it is also possible to adjust the total halogen concentration in the water system, the endotoxin concentration in the water system, the number and existence ratio of gram-negative bacteria in the water system, etc. Although not particularly limited, examples of "adjusting the existence amount of the bonded halogen compound" include starting or stopping (ending) the addition of the bonded halogen compound, increasing or decreasing the amount of the bonded halogen compound added, increasing or decreasing the existence amount or usage concentration of the bonded halogen compound, adjusting the total halogen concentration, etc.

The treated water obtained in the present embodiment is suitably treated water with an endotoxin concentration reduced or endotoxin production inhibited, endotoxin removed, etc., and although not particularly limited, examples include tap water, medical water (e.g., dialysis water, washing water, etc.), pharmaceutical purified water, etc., and one or two or more of these may be selected.

In the present embodiment, the location of the water system where the bonded halogen compound is caused to exist is not particularly limited, and may be any location, apparatus, system, or process.

In addition, in the present embodiment, the location where one or two or more selected from the bonded halogen compound, a halogen-based compound, and a stabilizing compound (hereinafter also referred to as "compound used in the present embodiment" or "the compound") are added, or the location where the bonded halogen compound to be caused to exist in the water system is produced, is not particularly limited, is suitably the water in the water system, and may also be produced by adding a substance produced as the drug at a location (e.g., a chemical factory) outside the water system. As a suitable aspect, suitably, before a membrane treatment, the compound used in the present embodiment is added to the water system, and/or the bonded halogen compound is produced in the water system, and the location of adding the compound, the drug, etc. may be the location of producing the bonded halogen compound used in the present embodiment. In the present embodiment, the compound used in the present embodiment may be included in a drug, and the drug may be added to the water system.

The water system in which the bonded halogen compound is caused to exist is, more suitably, a water treatment system that implements a water treatment, and even more suitably, a membrane treatment system that implements a membrane treatment.

In the present embodiment, when causing the bonded halogen compound to exist in the water system, within a range that does not impair the effects of the present embodiment, one or two or more selected from a bonded halogen compound with a molecular weight less than 60, an organic compound, another biofouling inhibition drug may be used, and may be included together as a single-agent drug.

### <Total halogen concentration in water system>

In the present embodiment, the total halogen concentration in the water system is suitably adjusted to a specific concentration by controlling causing the bonded halogen compound to exist in the water system, and accordingly, a water system (water to be treated, circulating water, etc.) with a desired concentration can be prepared.

In addition, the total halogen concentration in the drug containing the bonded halogen compound is not particularly limited, and is suitably a concentration with which the total halogen concentration in the water system can be adjusted to a desired concentration when the drug is added to the water system.

Although the total halogen concentration (mg/1L of water system (as total chlorine concentration); mg-Cl₂/L) in the water system is not particularly limited, as the total halogen concentration, a suitable lower limit value is preferably 0.01 mg/L or more, more preferably 0.05 mg/L or more, and even more preferably 0.1 mg/L or more, and a suitable upper limit value is preferably 100 mg/L or less, more preferably 50 mg/L or less, even more preferably 40 mg/L or less, still more preferably 30 mg/L or less, and still more preferably 20 mg/L or less. The suitable numerical value range is preferably 0.01 to 50 mg/L, and more preferably 0.1 to 20 mg/L. Accordingly, since better biofouling inhibition or biofouling inhibition together with endotoxin production inhibition can be achieved in the water system, treated water with better endotoxin concentration reduction can be obtained.

In the present embodiment, the period of use (time (hour)/day) of the bonded halogen compound in the water system is not particularly limited, but a suitable lower limit value is preferably 0.1 h/day or more, more preferably 0.25 h/day or more, even more preferably 1 h/day or more, still more preferably 3 or 6 h/day or more, and the number of days of the period of use is not particularly limited, but may be about 1 day to 7 days. In addition, by using together with an organic slime control agent, it is possible to reduce the period of use, preferably to 0.1 to 2 h/day, more preferably 0.25 to 1 h/day. The period of use may be the period of existence or the period of addition.

In the present embodiment, the usage concentration (mg (as drug mass)/1L of water system) of the organic slime control agent for the water system is not particularly limited, a suitable lower limit value is preferably 0.001 mg/L or more, more preferably 0.01 mg/L or more, even more preferably 0.03 mg/L or more, still more preferably 0.05 mg/L or more, and a suitable upper limit value is preferably 1000 mg/L or less, more preferably 100 mg/L or less, and even more preferably 50 mg/L or less, and a suitable numerical value range is preferably 0.01 to 100 mg/L. In addition, the period of use (time (hour)/day) of the organic slime inhibitor for the water system is not particularly limited, but a suitable lower limit value is preferably 1 h/day or more, more preferably 3 h/day or more, even more preferably 6 h/day or more, still more preferably 12 h/day or more, and still more preferably 18 or 20 h/day or more, and a suitable upper limit value thereof is preferably 24, 23.5, 23, or 22 h/day or less. In the present embodiment, the bonded halogen compound and the organic slime inhibitor may be used in separate periods such that the periods of use of both do not overlap, with the organic slime control agent used outside the period of use of the bonded halogen compound, or the periods of use of both may also overlap.

### <Endotoxin concentration in water system>

In the present embodiment, the endotoxin concentration in the water system can be suppressed or reduced. In the present embodiment, it is suitable to control causing the bonded halogen compound to exist in the water system until the water system reaches a desired endotoxin concentration, and accordingly, a water system or treated water with a desired reduced endotoxin concentration can be obtained. The endotoxin concentration in the water system may be taken as the endotoxin concentration of the treated water. As an indicator of endotoxin inhibition, for example, the endotoxin concentration in the case of a control (no drug addition) may be taken as 100%.

In addition, as a suitable upper limit value, the endotoxin concentration (EU/mL) in the water system is preferably 90 EU/mL or less, more preferably 80 EU/mL or less, more preferably 70 EU/mL or less, more preferably 60 EU/mL or less, more preferably 50 EU/mL or less, more preferably 40 EU/mL or less, even more preferably 30 EU/mL or less, still more preferably 20 EU/mL or less, still more preferably 15 EU/mL or less, still more preferably 10 EU/mL or less, still more preferably 9 EU/mL or less, and still more preferably 8 EU/mL or less.

### <Conditions of water system>

Although not particularly limited, the pH of the water system is preferably 3 to 9, more preferably 4 to 9, and even more preferably 5 to 9, and this pH may be adjusted with a pH adjusting agent.

Although not particularly limited, the water temperature of the water system is preferably 4 to 50°C, and more preferably 10 to 40°C.

Although not particularly limited, the TOC (total organic carbon) of the water system is preferably 100 mg/L or less, more preferably 50 mg/L or less, even more preferably 10 mg/L or less, and still more preferably 5 mg/L or less, and the TOC is desirably low.

Although not particularly limited, the ORP (oxidation-reduction potential) of the water system is preferably 200 to 600 mV, and more preferably 200 to 400 mV.

### <State (indicator) of gram-negative bacteria in water system>

In the present embodiment, causing the bonded halogen compound to exist (e.g., including or using) in the water system is suitably controlled based on the state of gram-negative bacteria in the water system, and "causing to exist" may be "producing". The control may be executed by a control part.

Furthermore, it is more suitable to use one or two or more selected from the bonded halogen compound, the halogen-based compound, and the stabilizing compound such that the total halogen concentration in the water system becomes the desired concentration described above, and/or the endotoxin concentration in the water system becomes the desired concentration (relative proportion, EU/mL) described above. The endotoxin concentration in the water system may be the endotoxin concentration in the treated water.

In addition, the addition and the addition sequence of the compounds for adjusting to the desired concentration are not particularly limited, and may be addition of the bonded halogen compound alone, may be addition adjustment of the halogen-based compound and/or the stabilizing compound alone, or may be a combination of these, and the addition of the compounds may be at the same time or at different times. The combination may be, for example, addition of the bonded halogen compound followed by addition adjustment of the halogen-based compound and/or the stabilizing compound, may be addition adjustment of the halogen-based compound and/or the stabilizing compound followed by addition of the bonded halogen compound, or may be a combination of these, and is not particularly limited.

The state of gram-negative bacteria in the water system may suitably be one or two or more selected from the existence ratio of all gram-negative bacteria in the bacterial flora, the existence ratio of gram-negative bacteria in the total of gram-negative bacteria and gram-positive bacteria excluding bacteria that cannot be identified as gram-negative or positive, the existence ratio of individual gram-negative bacteria, the types of gram-negative bacteria, and the number of all or individual gram-negative bacteria. Among these, the existence ratio of all gram-negative bacteria in the bacterial flora is suitable from the viewpoint of being capable of accurately inhibiting endotoxin production, and the number of all or individual gram-negative bacteria is suitable from the viewpoint of simple and easy measurement. Examples of a means for determining the state of gram-negative bacteria in the water system include amplicon sequence data analysis (QIIME2).

In addition, as the indicator, it is suitable to use or include at least Pseudomonas genus bacteria and/or Cupriavidus genus bacteria.

In the present embodiment, "all gram-negative bacteria" refers to all gram-negative bacteria that can be detected by a bacterial measurement method (suitably a genetic analysis method), and "individual gram-negative bacteria" refers to a group of gram-negative bacteria that can be detected by a bacterial measurement method (suitably a genetic analysis method) and is classified into each bacterial group such as genus bacteria.

In the present embodiment, it is further suitable to take the state of gram-negative bacteria in the water system as an indicator, and based on this indicator, determine the existence (suitably the content amount or usage amount) of the bonded halogen compound in the water system. Using this determination process or determination method, it is suitable not to allow gram-negative bacteria to become dominant from the viewpoint of endotoxin production inhibition and endotoxin concentration reduction.

The existence or production (suitably the content amount or usage amount (list of determination items)) of the bonded halogen compound in the water system to be determined is not particularly limited, but examples may include one or two or more selected from a timing of use (start, maintenance, end, etc.), a period of use, a usage amount, adjustment of the total halogen concentration, etc.

The indicator is suitably the state of gram-negative bacteria in the water system. The gram-negative bacteria are not particularly limited, and are suitably corresponded or changed according to each water system based on the results of bacterial flora analysis and bacterial inspection for each site of water system. For example, dominant bacteria may be selected from the bacterial flora of a certain water system, the gram-negative bacteria therein, and the existence ratio thereof.

In the present embodiment, by controlling the existence or production (e.g., inclusion, use) of the bonded halogen compound in the water system based on the indicator, it is possible to exert endotoxin production inhibition, biofilm formation inhibition, biofouling inhibition, etc. in the water system. Accordingly, since it is possible to reduce the endotoxin concentration in the water system or in the obtained treated water, it is also possible to expect prevention or improvement of various symptoms or various diseases caused by endotoxin in the treated water, and by using the present embodiment, it is also possible to manufacture or produce and provide treated water for medical applications and the like.

As a suitable aspect of the present embodiment, in the case where the existence ratio of gram-negative bacteria in the bacterial flora in the water system is equal to or greater than a specific value, the bonded halogen compound is caused to exist in the water system, and the specific value is more suitably set within a range of 60% to 10%. In addition, as a suitable aspect of the present embodiment, in the case where the number of bacteria in the water system is equal to or greater than a specific value, the bonded halogen compound is caused to exist in the water system, and the specific value is more suitably set within a range of 1,000 cfu/mL to 10 cfu/mL. In addition, the existence ratio and the number of bacteria may be appropriately combined, and the compound may be caused to exist in the water system until either one or both of the specific values are reached.

### <State of gram-negative bacteria in water system: Existence ratio in bacterial flora in water system>

In the present embodiment, the numerical value of the existence ratio in the bacterial flora in the water system serving as the indicator may be appropriately set, and the existence ratio of all gram-negative bacteria in the bacterial flora in the water system to be set is suitably set to the "specific value". Since all bacteria are composed of negative bacteria and positive bacteria, it is also possible to consider the existence ratio of gram-negative bacteria involved in endotoxin production and set an "existence ratio of gram-positive bacteria in the bacterial flora" as the "specific value" (e.g., bacterial flora 100% - all gram-negative bacteria 10%), but since gram-negative bacteria are involved in endotoxin production, the "existence ratio of gram-negative bacteria" is desirably taken as a criterion.

Generally, with the existence ratio of gram-negative bacteria increasing, the endotoxin concentration in the water system or treated water is very likely to increase. In contrast, according to [Examples] to be described later, with the bonded halogen compound, the existence ratio of all gram-negative bacteria in the bacterial flora in the water system can be significantly reduced, and the endotoxin concentration in the water system can be significantly reduced. Thus, as a suitable aspect of the present embodiment, the "existence ratio of all gram-negative bacteria in the bacterial flora" in the water system is set to a "specific value", and in the case of being "equal to or greater than the specific value", the compound (suitably, the bonded halogen compound, the halogen-based compound, the stabilizing compound) is added to, included in, or used in the water system, and for endotoxin production inhibition or endotoxin concentration reduction, the bonded halogen compound is suitably caused to exist in the water system (addition of the compound, increase in the usage amount, increase in the total halogen concentration, etc.).

In the present embodiment, the lower the existence ratio (specific value) of all gram-negative bacteria in the bacterial flora is set, the more suitable it is from the viewpoint of endotoxin production inhibition, and suitably, the existence ratio is preferably set to 60% or more, more preferably 50% or more, even more preferably 40% or more, still more preferably 30% or more, still more preferably 20% or more, and still more preferably 10% or 5% or more, and it is also possible to appropriately combine two or more setting values selected from these to set within a range of setting values. For example, the specific value may be set within a range of 60% to 10%.

In addition, for example, in the case where the existence ratio of gram-negative bacteria in the bacterial flora in the water system is set to become a desired specific value (e.g., 10% or more), causing the bonded halogen compound to exist (start of use of the compound, increase in the usage amount, etc.) or the existence amount of the bonded halogen compound is suitably controlled to become the desired setting value. At this time, to reach the desired specific value, it is also possible to further increase the concentration of the bonded halogen compound in the water system and/or further extend the period of existence of the bonded halogen compound in the water system.

In addition, in the present embodiment, as the setting value of the "existence ratio of the gram-negative bacteria in the total of gram-negative bacteria and gram-positive bacteria excluding bacteria that cannot be identified as gram-negative or gram-positive", the setting value of the "existence ratio (specific value) of all gram-negative bacteria in the bacterial flora" described above may be appropriately adopted. For example, in the case of being 50% or more, by adjusting the existence ratio of the gram-negative bacteria to be lower (e.g., less than 20% or 10%), endotoxin production can be inhibited.

In addition, in the case of no longer corresponding to the "specific value or more of the existence ratio" described above (i.e., in the case of the "specific value or less"), from the viewpoint of cost reduction of the compound or the drug, inhibition of generation of resistant bacteria, etc., the use of the compound in the water system may be stopped, or the existence amount of the bonded halogen compound or the usage amount of the compound may be decreased. Furthermore, by changing "specific value or more" to "specific value or less", it may be set to stop of use or decrease in the usage amount of the compound or the bonded halogen compound in the water system. For example, setting to 60% to 10% or less, or 10% or less, in the case of such "specific value or less", the use of the compound in the water system may be stopped, or the existence amount of the bonded halogen compound or the usage amount of the compound may be decreased.

In addition, for example, for each water system, the types of gram-negative bacteria may be selected from the dominance order in the bacterial flora in the water system, and examples include selecting from the top to the 2nd, 3rd, 4th, or 5th in terms of the existence ratio of gram-negative bacteria, more suitably selecting from the top to the 2nd or 3rd. In addition, for each water system, individual gram-negative bacteria may be taken as an indicator, and each gram-negative bacterium in the bacterial flora in the water system and the existence ratio thereof may be selected and appropriately set. In such a case, amplicon sequence data analysis (QIIME2) may be used to perform identification and selection. For example, "specific value or more" of certain gram-negative bacteria or multiple top gram-negative bacteria identified and selected by analysis is preferably set to 5% or more, more preferably 10% or more, even more preferably 20% or more, and still more preferably 30% or 40% or more, and at this time, existence or production of the bonded halogen compound in the water system or the existence amount of the compound is suitably controlled, and as described above, in the case of no longer corresponding to the numerical value or in the case where the "specific value or more" is set to "specific value or less", setting may be performed to stop the use or decrease the usage amount of the compound in the water system. The specific value may be set within a range of a specific value (e.g., 5 to 40%) appropriately combining two or more setting values selected from these.

### <State of bacteria in water system: Number of bacteria in water system>

In the present embodiment, the numerical values of the number of bacteria in the water system as an indicator, the number of all gram-negative bacteria, or the number of individual gram-negative bacteria may be appropriately set, and the number of total bacteria or the number of gram-negative bacteria in the water system to be set is suitable set to a "specific value".

In the present embodiment, the lower the number of bacteria (specific value) in the water system is set, the more suitable it is from the viewpoint of endotoxin production inhibition, and suitably, the number of bacteria is preferably set to 10,000 cfu/mL or more, more preferably 1,000 cfu/mL or more, even more preferably 500 cfu/mL or more, still more preferably 100 or 50 cfu/mL or more, and still more preferably 30, 20 or 10 cfu/mL or more, and it is also possible to set within a range of setting values by appropriately combining two or more setting values selected from these. For example, the specific value may be set within a range of 1,000 cfu/mL to 10 cfu/mL. The "number of bacteria in the water system" of this specific value may be replaced with "number of all gram-negative bacteria in the water system" or "number of individual gram-negative bacteria".

As a suitable aspect of the present embodiment, the number of bacteria in the water system is set to a "specific value", and in the case of being "equal to or greater than the specific value", the compound is added to, included in, or used in the water system, and for endotoxin production inhibition or endotoxin concentration reduction, causing the bonded halogen compound to exist in the water system (existence amount of the compound) is suitably controlled. In addition, in the case of no longer corresponding to "equal to or greater than the specific value" (i.e., in the case of being "equal to or less than the specific value"), it is suitable to perform stop of use the compound in the water system, decrease in the usage amount, etc. For example, in the case where the number of bacteria in the water system is 10 cfu/mL or more (specific value), suitably, the compound or the bonded halogen compound is caused to exist, to configure to be less than the specific value (10 cfu/mL). Regarding setting of the specific value, adjustment (increase or decrease in the concentration and period of existence), control, etc. of the compound, <State of gram-negative bacteria in water system: Existence ratio in bacterial flora in water system> described above may be appropriately adopted.

In the present embodiment, the "water system" of the number of bacteria in the water system may be "treated water" after treatment, i.e., may be the number of bacteria in the treated water. In addition, as shown in [Examples] to be described later, as shown in the control of the water system (raw water), at least half to 70% or more of all bacteria are gram-negative bacteria, so "all bacteria" including "gram-negative bacteria" and also gram-positive bacteria may be taken as an indicator, the number of the gram-negative bacteria is appropriately adopted, and the number of all bacteria is set to be equal to or greater than a specific value, more preferably the specific value is set within a range of 1000 to 10 cfu/mL. In the case where the number of bacteria in the water system corresponds to equal to or greater than the specific value, the bonded halogen compound is used in the water system, and for endotoxin production inhibition or endotoxin concentration reduction, causing the bonded halogen compound to exist in the water system (existence amount of the compound) is suitably controlled. In addition, in the case of no longer corresponding to "equal to or greater than the specific value" (i.e., in the case of being "equal to or less than the specific value"), it is suitable to perform stop of use of the compound in the water system, decrease in the usage amount, etc.

In addition, in the case of no longer corresponding to "equal to or greater than the specific value of the number of bacteria" described above (i.e., in the case of being "equal to or less than the specific value"), from the viewpoint of cost reduction of the compound or the drug, inhibition of generation of resistant bacteria, etc., the use of the bonded halogen compound in the water system may be stopped, or the usage amount of the bonded halogen compound may be reduced. Furthermore, by changing "equal to or greater than the specific value" to "equal to or less than the specific value", it may be set to stop of use or decrease in the usage amount of the bonded halogen compound in the water system. For example, the specific value is suitably set within a range of 1,000 cfu/mL to 10 cfu/mL, and in the case of being "equal to or less than the specific value", from the viewpoint of cost reduction of the compound or the drug, inhibition of generation of resistant bacteria, etc., the use of the compound or the bonded halogen compound in the water system may be stopped, or the usage amount of the bonded halogen compound may be reduced.

As gram-negative bacteria suitable as the indicator used in the present embodiment, for example, at least one or two or more selected from Pseudomonas genus bacteria, Cupriavidus genus bacteria, Methyloversatilis genus bacteria, Sphingopyxis genus bacteria, Rhizobacter genus bacteria, Novosphingobium genus bacteria, Xanthobacteraceae genus bacteria, Berkiella genus bacteria, Neochlamydia genus bacteria, Legionella genus bacteria, Vermiphilaceae genus bacteria, Sphingomonas genus bacteria, Phenylobacterium genus bacteria, Nannocystis genus bacteria, Bradyrhizobium genus bacteria, and Hyphomicrobium genus bacteria may be used, and all of these may be taken as "all gram-negative bacteria". Among these, at least Pseudomonas genus bacteria and/or Cupriavidus genus bacteria is suitably taken as the indicator. With the number of indicators being small and the existence ratio in the bacterial flora being high, and the number of bacteria taken as the indicators being small, work efficiency of bacterial testing is improved, and it becomes easy to determine the period of use and the usage amount of the drug more simply and more accurately.

In the water system, suitably, at least one selected from the gram-negative bacteria described above, or Pseudomonas genus bacteria and/or Cupriavidus genus bacteria are set as the indicator, and in the case where such an indicator exists or in the case where the indicator corresponds to a desired numerical value range (threshold) that has been set, causing the bonded halogen compound to exist is controlled.

### <Measurement method of bacteria in water system>

In the present embodiment, the state (bacterial flora analysis, classification, number of bacteria, identification, etc.) of bacteria in the water system may be determined using conventional bacterial detection methods or measurement methods. As bacterial detection methods or measurement methods, for example, qualitative and quantitative confirmation may be performed according to one or two or more selected from an agar plate method (colony forming unit; CFU/mL), an MPN method (most probable number: MPN/100mL), an antibody method (enzyme-labeled, fluorescence-labeled, radioactive substance-labeled, etc.), a quantitative PCR method (copies/mL), a T-RFLP method, an immunoblot method, a western blot method, an ELISA method, a mass spectrometry method, a genetic analysis method, etc. For example, Gram(-) Bacteria ELISA Kit, 16SrDNA concentration measurement by a genetic analysis method, and, for example, amplicon sequence data analysis (QIIME2) may be mentioned.

Although not particularly limited, examples of the genetic analysis method include one or two or more selected from western blot, ELISA, DNA chip, FISH assay, an immunostaining method, and other conventional genetic analysis methods [e.g., Sanger sequence analysis, next-generation DNA sequencing analysis (NGS), PCR, LCR (ligase chain reaction), SDA (strand displacement amplification), NASBA (nucleic acid sequence-based amplification), ICAN (isothermal and chimeric primer-initiated amplification), a LAMP method (loop-mediated isothermal amplification), etc.].

In the present embodiment, the target for confirming (detecting, measuring, etc.) the state of gram-negative bacteria in the water system is not particularly limited as long as it is a water system, and examples include water in a water system such as water to be treated or circulating water, and a biofilm existing in the water system. Examples of such a biofilm include suspended matter in water, or deposits on a piping, an apparatus, a membrane, etc. of the water system.

In addition, the location for confirming (detecting or measuring) the bacterial flora is not particularly limited as long as it is a water system, and a location where a biofilm exists is suitable. Examples of the location where a biofilm exists include a piping, a flow path, a water tank, a membrane, a membrane treatment apparatus, etc., and a location where a biofilm is attached or accumulates is suitable. Collection of the biofilm may appropriately adopt a conventional method, and may be, for example, filtration concentration of suspended matter, scraping of deposits, etc.

### 1-4. Examples of present embodiment

Examples of the present embodiment will be described below, but the present embodiment is not limited thereto.

Examples of a membrane treatment method, a biofilm inhibition method, a biofouling inhibition method, an endotoxin production inhibition method, etc. in the present embodiment will be described below, but are not limited thereto. A control part used in the present embodiment is configured to execute the methods in the present embodiment, and instead of the control part, an operator (human) may appropriately execute the methods in the present embodiment. The control mechanism may perform feedback control by executing such adjustments or controls as increase, decrease, etc.

### <Example 1 of present embodiment>

Example 1 of the present embodiment will be described below, but the present embodiment is not limited thereto.

Example 1 of the present embodiment is a biofilm inhibition method including:
a process of measuring bacteria in a water system; and
a process of controlling an existence amount, in the water system, of a bonded halogen compound produced using at least a halogen-based compound and a stabilizing amino compound, based on a measurement result of the bacteria, and
is suitably a biofilm inhibition method in a water system where gram-negative bacteria exist. A control part may control and execute each process and each part of this method.

Example 1 of the present embodiment may also be one or more selected from a membrane treatment method, a biofouling inhibition method, an endotoxin production inhibition method, an endotoxin concentration reduction method, a method for producing treated water with a reduced endotoxin concentration, etc., in addition to the biofilm inhibition method. In the case of controlling the existence amount of the bonded halogen compound or the use of the compound, examples include increasing or decreasing the addition amount or the usage amount of the compound or a drug containing the compound, increasing or decreasing the total halogen concentration, etc. "The compound" refers to one or more selected from the bonded halogen compound, the halogen-based compound, and the stabilizing compound (suitably an amino compound).

Example 1 of the present embodiment suitably further includes a process of performing a membrane treatment on water to be treated containing the bonded halogen compound, and more suitably includes a process of recovering treated water in which endotoxin production is inhibited by the membrane treatment. At this time, the present embodiment 1 may be a membrane treatment method.

In addition, Example 1 of the present embodiment may further include a process of circulating circulating water containing the bonded halogen compound, and more suitably, the circulating water is circulating water with endotoxin production inhibited or a concentration reduced.

As a more suitable aspect of Example 1 of the present embodiment, based on the bacterial measurement result of the water system, control may be performed such that, in the case where the state of gram-negative bacteria is equal to or greater than a specific value that has been set, the existence amount of the bonded halogen compound in the water system is increased ("ON" of inclusion or use), and/or in the case of no longer corresponding to equal to or greater than the specific value, the existence amount of the bonded halogen compound in the water system is decreased ("OFF" of inclusion or use). "In the case of no longer corresponding to equal to or greater than the specific value" may be a case where the state of gram-negative bacteria is equal to or less than the specific value, or has become equal to or less than the specific value. To increase the existence amount of the bonded halogen compound in the water system, the use of the compound may be started, and to decrease the existence amount, the use of the compound may be stopped (ended). In addition, a range of specific values for maintaining the existence amount of the bonded halogen compound in the water system may be further set between "equal to or greater than a specific value" and "equal to or less than a specific value".

In this manner, based on the bacterial measurement result of the water system, the control of the existence (inclusion or use) and the control of ON and OFF of the bonded halogen compound in the water system can be performed simply and accurately, and can be performed continuously or intermittently. Examples of such control of the existence include addition or non-addition of the compound or a drug containing the compound, an increase or a decrease of the usage amount of the compound or the drug containing the compound, an increase or a decrease of the total halogen concentration, etc., but are not limited thereto.

More suitably, the state of the gram-negative bacteria is one or two or more selected from the existence ratio of all gram-negative bacteria in the bacterial flora, the existence ratio of individual gram-negative bacteria, the types of gram-negative bacteria, and the number of all or individual gram-negative bacteria.

As a more suitable aspect, suitably, in the case where the existence ratio of gram-negative bacteria in the bacterial flora in the water system is equal to or greater than a specific value (e.g., 10%), the use of the bonded halogen compound is started or increased, and/or in the case of no longer corresponding to equal to or greater than the specific value (e.g., 10%), for example, being 5%, the use of the bonded halogen compound is stopped or decreased.

As another more suitable aspect, in the case where the number of bacteria in the water system is equal to or greater than a specific value (e.g., 100 cfu/mL), the bonded halogen compound is suitably caused to exist (start or increase of use), and in the case of no longer corresponding to equal to or greater than the specific value, the use of the bonded halogen compound is suitably stopped or decreased.

### 1-5. Water system to which present embodiment is applied

The water system to which the present embodiment is applied is not particularly limited, and the present embodiment is suitably applied to a water system where production of treated water with endotoxin production inhibited or an endotoxin concentration reduced is expected, and furthermore, is applied to a water system where biofouling occurs, and being capable of biofouling inhibition or biofilm formation inhibition in such a water system is also an advantage of the present embodiment. The compound or a drug containing the compound will hereinafter also be referred to as a drug.

Although not particularly limited, examples of the water system that may be applied to the present embodiment include: a water treatment system such as a system equipped with various processes for water treatment, a membrane treatment system, etc.; a circulating water system (cooling water system, boiler water system) equipped with a cooling tower, a boiler, etc.; and a circulating water system such as a process water system including a pulp process water system for paper pulp manufacturing and a scrubber water system, and may be applied to one or two or more selected from these.

In the water treatment system and the like, the drug may be used by adding to water to be treated and the like, and is suitably to added immediately before a membrane treatment or between a membrane treatment and a preceding treatment. In the circulating water system and the like, the drug may be used by adding to circulating water or supply water.

There are no particular restrictions on the location and method of adding the drug in the present embodiment, and in the water system used, the drug may be added at any spot as an aqueous solution prepared at any concentration. In addition, the present embodiment may be applied to a circulating water system of a heat exchanger in building air conditioning, a general factory, a petrochemical complex, etc.

An operation method of causing the bonded halogen compound to exist in the present embodiment may be applied to a membrane apparatus (suitably a reverse osmosis membrane apparatus). The operation method may appropriately adopt the membrane treatment method, the biofouling inhibition method, the endotoxin production inhibition method, the endotoxin concentration reduction method, etc. described above, and may be implemented accordingly. The operation method of the present embodiment may be applied to the membrane treatment method, the biofouling inhibition method, the endotoxin production inhibition method, the water system, the apparatus, the system, etc. The operation method in the present embodiment may be applied to a water treatment system having at least a membrane treatment system (suitably a reverse osmosis membrane system).

Although not particularly limited, examples of a separation membrane used in the present embodiment include an ultrafiltration membrane (UF membrane), a microfiltration membrane (MF membrane), a nanofiltration membrane (NF membrane), a reverse osmosis membrane (RO membrane), etc., and the separation membrane is one or two or more selected from these. Among these, the reverse osmosis membrane is suitable. The reverse osmosis membrane (RO membrane) is not particularly limited, and examples include a membrane in a shape such as a spiral shape, a hollow fiber shape, a flat membrane shape, etc., with a skin layer made of resin such as cellulose acetate, aromatic polyamide, aromatic polyimide, etc.

Although not particularly limited, examples of a water system including a reverse osmosis membrane apparatus include: a water treatment water system; a circulating water system such as a cooling tower; a process water system such as for paper pulp manufacturing, a water supply system, a wastewater recovery system, etc.

An example of a water system including a reverse osmosis membrane apparatus may include, sequentially or in any order: a coagulation treatment process of flowing raw water in and injecting a flocculant into the raw water to form coagulation or flocs of turbid substances; a solid-liquid separation process of separating precipitates and supernatant from the treated water containing flocculated matter; and a turbidity removal membrane treatment process of further removing turbid substances from the inflowing supernatant before a reverse osmosis membrane treatment. In addition, these treatment processes may be performed using a treatment apparatus or a treatment part configured to perform each treatment process.

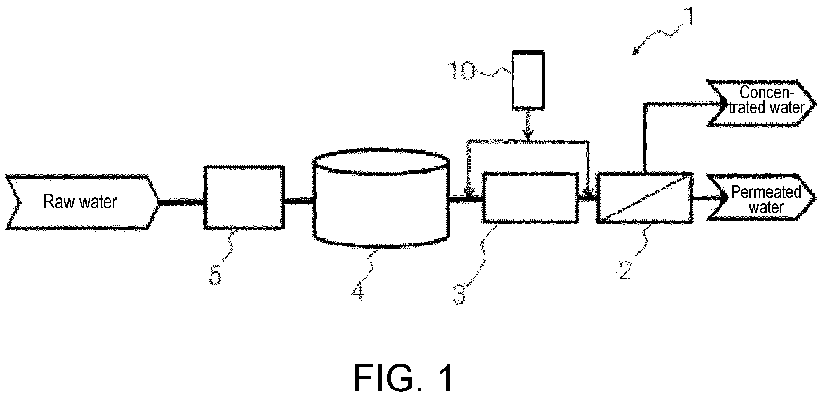

As an example of a water system including a reverse osmosis membrane apparatus, a water system 1 shown in FIG. 1, for example, will be referred to and described, but the water system according to the present embodiment is not limited thereto. The water system 1 including a reverse osmosis membrane apparatus 2 includes: a coagulation process performed by a coagulation treatment apparatus 5 configured to flow in raw water and inject a flocculant into the raw water to form coagulation or flocs of turbid substances and the like; a solid-liquid separation process performed by a solid-liquid separator 4 configured to separate precipitates and supernatant from the treated water containing flocculated matter; a pre-treatment process performed by a filter 3 configured to perform a turbidity removal membrane treatment to further remove turbid substances and the like from the inflowing supernatant before a reverse osmosis membrane treatment; and a reverse osmosis membrane treatment process performed by the reverse osmosis membrane apparatus 2 to which the treated water containing the bonded halogen compound that has been pre-treated is supplied. In the reverse osmosis membrane treatment process, water is separated into concentrated water and permeated water.

In the present embodiment, the compound (the bonded halogen compound, the halogen-based compound, the stabilizing compound) or a drug containing these is suitably added to the pre-treatment process or the reverse osmosis membrane process and a preceding process thereof, may be added to a piping or a flow path flowing into the pre-treatment process or the reverse osmosis membrane process, and may also be added between the pre-treatment process and the reverse osmosis membrane process. In addition, the compound and the like are suitably added downstream after the solid-liquid separation process.

In addition, an example of a water system including a reverse osmosis membrane apparatus may be a water treatment apparatus (suitably an ultrapure water apparatus) that includes a raw water supply path configured to supply raw water, and a reverse osmosis membrane apparatus configured to separate the raw water supplied from the raw water supply path into permeated water and concentrated water.

In addition, an example of a water system including a reverse osmosis membrane apparatus may be a water treatment apparatus that includes a raw water supply path configured to supply raw water, a filtration apparatus and a filtration treatment tank configured to filter the raw water supplied from the raw water supply path, a filter apparatus configured as a pre-treatment for a reverse osmosis membrane treatment of this filtered treated water, and a reverse osmosis membrane apparatus. The turbidity removal membrane treatment described above may be performed by the filter apparatus.

### 1-6. Measurement methods

### <Calculation method for total residual chlorine concentration>

In the present embodiment, the total residual chlorine concentration is calculated based on the following method. Reference may be made to JIS K 0400-33-10:1999.

Total residual chlorine concentration = Free chlorine concentration + Activated bonded chlorine concentration + Stabilized bonded chlorine concentration.

Free chlorine concentration: Free chlorine concentration by a DPD method (pocket residual chlorine meter, manufactured by HACH) [herein, the free chlorine concentration by the DPD method is a chlorine concentration measurement result (mg-Cl₂/L) after 5 to 30 seconds using a DPD (free) reagent, which is a reagent for measuring free chlorine].

Activated bonded chlorine concentration: A value obtained by subtracting the measurement result of the above free chlorine concentration (mg-Cl₂/L) from a chlorine concentration measurement result (mg-Cl₂/L) after 300 seconds using a DPD (free) reagent, which is a reagent for measuring free chlorine.

Stabilized bonded chlorine concentration: A value obtained by subtracting the chlorine concentration measurement result (mg-Cl₂/L) after 300 seconds using a DPD (free) reagent, which is a reagent for measuring free chlorine, from a chlorine concentration measurement result (mg-Cl₂/L) after 180 seconds using a DPD (total) reagent, which is a reagent for measuring total chlorine. Free chlorine ratio (%) = (Free chlorine concentration/Total residual chlorine concentration) × 100 Stabilized bonded chlorine ratio (%) = (Stabilized bonded chlorine concentration/Total residual chlorine concentration) × 100 The temperature of the test environment is set to 25°C.

### <Measurement methods for pH, TOC, and ORP>

The pH (25°C) of the water system (water to be treated, circulating water, etc.) may be measured using a handy pH meter manufactured by HORIBA. In addition, the TOC of the water system may be measured using a TOC meter. The ORP of the water system may be measured using an ORP meter.

### <Measurement method for endotoxin concentration>

In the present embodiment, the concentration of endotoxin in the water system or in water is measured and calculated based on the Japanese Pharmacopoeia, 17th Edition (General Test Methods) 4.01 Endotoxin Test Method: Turbidimetry (Japanese Pharmacopoeia, 17th Edition, Complete Version (March 7, 2016, Ministry of Health, Labour and Welfare Notification No. 64)).

### <Analysis of bacterial flora and types of bacteria>

In the present embodiment, as the analysis of bacterial flora and types of bacteria, amplicon sequence data analysis (QIIME2) may be used. 16S rRNA gene amplicon sequence analysis is performed on samples collected from the water system, and from the results of this analysis, the existence ratio of each bacterium, the existence ratio of gram-negative bacteria in the bacterial flora, etc. may be calculated using open-source analysis software called QIIME2. At this time, for examples, the results may also be formatted in taxonomic bar plots (e.g., https://view.qiime2.org). As a database for 16S rRNA gene amplicon sequence analysis, a bacterial database called silva may be used.

### <Measurement method for number of bacteria (cfu/mL)>

In the present embodiment, the number of bacteria (cfu/mL) in the water system or in water may be measured and calculated based on a bacteria number measurement method which is an agar dilution medium method (cultivation: temperature 30°C, 3 days). CFU is an abbreviation for "colony forming unit", and is a unit representing the number of viable bacteria (number of living bacteria).

### 2. Endotoxin production inhibition method according to present invention

In the description of the methods and the like in the present embodiment, descriptions of each configuration and each treatment method, such as biofouling inhibition, endotoxin production inhibition, the drug, etc., that overlap with "1." described above and "3." to be described later will be appropriately omitted, but the descriptions in the "1." and "3." also apply to the present embodiment and may be appropriately adopted.

The present embodiment can provide an endotoxin production inhibition method or an endotoxin concentration reduction method in a water system, and a manufacturing method for treated water with a reduced endotoxin concentration, in which a bonded halogen compound produced using at least a halogen-based compound and a stabilizing amino compound or a bonded halogen compound with a molecular weight of 60 or more is caused to exist in a water system. The bonded halogen compound is suitably caused to exist in or apply to a water system where gram-negative bacteria exist.

A drug including a bonded halogen compound produced using at least a halogen-based compound and a stabilizing amino compound or a bonded halogen compound with a molecular weight of 60 or more is suitably added to the water system.

The bonded halogen compound is suitably produced using at least a halogen-based compound and/or a stabilizing compound, in a water system including a halogen-based compound or an amino compound derived from raw water or derived from a process.

The total halogen concentration in the water system is suitably adjusted to 0.01 to 100 mg/L.

The bonded halogen compound is suitably produced by adjusting the molar ratio (stabilizing compound/halogen-based compound) of the halogen-based compound and the stabilizing compound to 1.0 or more.

The compound is suitably caused to exist in the water system in the case where the existence ratio of gram-negative bacteria in the bacterial flora in the water system is equal to or greater than a specific value, more suitably, the specific value is within a range of 60% to 10%, and accordingly, the bonded halogen compound is suitably caused to exist or control is performed thereon.

In the case where the number of bacteria in the water system is equal to or greater than a specific value, the compound is suitably caused to exist in the water system, more suitably, the specific value is within a range of 1,000 cfu/mL to 10cfu/mL, and accordingly, the bonded halogen compound is suitably caused to exist or control is performed thereon.

In addition, the bonded halogen compound used in the present embodiment has, for example, biofouling inhibition effect, biofilm inhibition effect, endotoxin production inhibition effect, endotoxin concentration reduction effect, proliferation inhibition effect of gram-negative bacteria, existence ratio inhibition effect of gram-negative bacteria in bacterial flora, etc., and suitably exerts these effects in a water system. Thus, the bonded halogen compound may be included in a biofouling inhibitor, a biofilm inhibitor, an endotoxin production inhibitor, an endotoxin concentration reduction agent, a gram-negative bacteria proliferation inhibitor, an existence ratio inhibitor of gram-negative bacteria in bacterial flora, etc., or may be used in these drugs, and examples include a biofouling inhibitor for use in endotoxin production inhibition, an endotoxin production inhibitor accompanies by biofouling inhibition, etc. In the present embodiment, the bonded halogen compound itself may be used as a drug in the present embodiment, or the bonded halogen compound may be used together with other components, or may be formed as a multi-agent drug combination composed of a drug of the bonded halogen compound and a drug of other components, which may be mixed when used. In addition, the drug in the present embodiment is expected to achieve effects such as the endotoxin production inhibition effect described above when using other drugs such as a slime inhibitor or a biofouling inhibitor (suitably an organic drug) in the water system, and is suitably used continuously or intermittently, more suitably intermittently. In addition, to produce the bonded halogen compound, a multi-agent drug combination or a combination product composed of a first drug including a halogen-based compound and a second drug including a stabilizing compound may be formed and mixed when used.

In the present embodiment, the bonded halogen compound or a use thereof may be provided to be used for the purposes of biofouling inhibition, biofilm inhibition, endotoxin production inhibition, endotoxin concentration reduction, proliferation inhibition of gram-negative bacteria, existence ratio inhibition of gram-negative bacteria in bacterial flora as described above. In addition, in the present embodiment, the bonded halogen compound may also be used to manufacture a drug or a formulation such as the biofouling inhibitor described above. In addition, in the present embodiment, methods such as biofouling inhibition described above that use the bonded halogen compound may also be provided.

### 3. Another embodiment of present invention

In the description of methods, present techniques, etc. in the present embodiment, descriptions of each configuration, each treatment method, each technical feature, etc., such as biofouling inhibition, endotoxin production inhibition, the drug, etc., that overlap with "1." and "2." described above and the content to be described later will be appropriately omitted, but the descriptions of the "1.", "2.", etc. also apply to the present embodiment and may be appropriately adopted.

The system for the membrane treatment, biofouling inhibition, endotoxin concentration reduction, etc. described above according to the present embodiment suitably includes a management apparatus for a membrane treatment, biofouling inhibition, endotoxin concentration reduction, etc. that includes at least the control part as described above. The management control system for a membrane treatment, biofouling inhibition, endotoxin concentration reduction, etc. of the present embodiment may further include a communication part capable of transmitting and receiving between the control part or the management apparatus for a membrane treatment, biofouling inhibition, endotoxin concentration reduction, etc. including the control part, and other parts or other apparatuses, via wireless and/or wired connection.

It is also possible to implement the method according to the present embodiment by an apparatus or a control part including a CPU and the like in an apparatus (e.g., a computer, a PLC, a server, a cloud service, etc.) for managing a membrane treatment status, a biofouling status, an endotoxin concentration status, etc. In addition, the method according to the present embodiment may also be stored as a program in hardware resources including recording media (a non-volatile memory (such as a USB memory), an SSD, an HDD, a CD, a DVD, a Blu-ray D, etc.), and implemented by the control part. It is also possible to provide an apparatus including the control part or the system, such as a management system for a green liquor treatment status that controls, by the control part, the addition of a specific amount of drug to crude green liquor. In addition, the management apparatus may include an input part such as a keyboard, a communication part such as a network, a display part such as a display, etc.

The apparatus or the management system for managing a membrane treatment status, a biofouling status, an endotoxin concentration status, etc. may include an input part such as a keyboard, a communication part such as a network, an output part such as a display, a storage part such as an HDD, the measurement part described above, a drug addition part, etc. The apparatus or the system preferably includes an input part, an output part, and a storage part, more preferably includes a communication part and/or a measurement part, and preferably includes a drug addition part.

The input part may accept a user operation performed by an operator performing the method of the present embodiment. The input part may include, for example, a mouse and/or keyboard. In addition, a display surface of a display device may be configured as an input part that accepts a touch operation.

The output part may output a membrane treatment status, a biofouling status, an endotoxin concentration status, etc., and information related thereto (e.g., tables, figures, explanatory text, etc.). The output part may include, for example, a display device that displays images, a speaker that outputs sound, a printing device that prints on printing media such as paper, etc., but is not limited thereto.

The storage part may store data inputted by the operator and data set for viewing a green liquor treatment status. The storage part may include, for example, a recording medium.

In addition, the management system and the like for a membrane treatment, biofouling inhibition, endotoxin production inhibition, etc. according to the present embodiment may be executed by utilizing programs and hardware. An embodiment (not shown) of a computer 1 according to an embodiment of the present embodiment, although not limited thereto, includes at least a CPU as a constituent element of the computer 1, may further include one or two selected from a RAM, a storage part, an output part, an input part, a communication part, a ROM, and a measurement part, etc., among these, suitably includes a RAM, a storage part, an output part, and an input part, and suitably further includes at least one of a communication part, a measurement part, a ROM, etc. Each constituent element is suitably connected by a bus as a data transmission path, for example.

In addition, the present technique may also adopt the following configurations or technical features.
- [1] A membrane treatment method or a biofouling inhibition method, or an endotoxin production inhibition method, in which a bonded halogen compound produced using at least a halogen-based compound and a stabilizing compound (suitably a stabilizing amino compound), or a drug containing the compound, or a bonded halogen compound with a molecular weight of 60 or more (e.g., a molecular weight of 1000 or 500 or less) or a drug containing the compound, is caused to exist in a water system where gram-negative bacteria exist.
- [2] The method according to the [1], where a drug containing a bonded halogen compound produced using at least a halogen-based compound and a stabilizing compound (suitably a stabilizing amino compound), or a bonded halogen compound with a molecular weight of 60 or more, is added to the water system. The bonded halogen compound is preferably at least one of a chlorine-based sulfamic acid compound or a bromine-based sulfamic acid compound.
- [3] The method according to the [1] or [2], where the bonded halogen compound is produced using at least a halogen-based compound and/or a stabilizing compound.
- [4] The method according to any one of the [1] to [3], where the bonded halogen compound is produced using a halogen-based compound and/or a stabilizing compound, in a water system containing a halogen-based compound or an amino compound derived from raw water or derived from a process.
- [5] The method according to any one of the [1] to [4], where a total halogen concentration in the water system is adjusted to 0.01 to 100 mg/L.
- [6] The method according to any one of the [1] to [5], where the bonded halogen compound is produced by adjusting a molar ratio (stabilizing compound/halogen-based compound) of the halogen-based compound and the stabilizing compound to 1.0 or more.
- [7] The method according to any one of the [1] to [6], where, in the case where an existence ratio of gram-negative bacteria in bacterial flora in the water system is a specific value or more, the bonded halogen compound is caused to exist, and the specific value is within a range of 60% to 10%.
- [8] The method according to any one of the [1] to [7], where, in the case where the number of bacteria in the water system is a specific value or more, the bonded halogen compound is caused to exist, and the specific value is within a range of 1,000 cfu/mL to 10 cfu/mL.
- [9] The method according to any one of the [1] to [8], where the water system takes, as an indicator, at least one selected from gram-negative bacteria of Pseudomonas genus bacteria, Cupriavidus genus bacteria, Methyloversatilis genus bacteria, Sphingopyxis genus bacteria, Rhizobacter genus bacteria, Novosphingobium genus bacteria, Xanthobacteraceae genus bacteria, Berkiella genus bacteria, Neochlamydia genus bacteria, Legionella genus bacteria, Vermiphilaceae genus bacteria, Sphingomonas genus bacteria, Phenylobacterium genus bacteria, Nannocystis genus bacteria, Bradyrhizobium genus bacteria, and Hyphomicrobium genus bacteria, and in the case where the indicator exists, the bonded halogen compound is caused to exist.
- [10] The method according to any one of the [1] to [9], where the water system takes Pseudomonas genus bacteria and/or Cupriavidus genus bacteria as an indicator, and in the case where the indicator exists, the bonded halogen compound is caused to exist.
- [11] The method according to any one of the [1] to [10], where production of endotoxin in the water system is inhibited using the bonded halogen compound.
- [12] The method according to any one of the [1] to [11], where the water system is a water system including a water treatment apparatus provided with a membrane treatment apparatus.
- [13] The method according to any one of the [1] to [12], where treated water with endotoxin production inhibited or an endotoxin concentration reduced is acquired.
- [14] An endotoxin production inhibitor or an endotoxin concentration reduction agent containing a bonded halogen compound with a molecular weight of 60 or more, or a bonded halogen compound produced using at least a halogen-based compound and/or a stabilizing compound.
   An endotoxin production inhibitor combination product or an endotoxin concentration reduction agent combination product composed of a first drug containing a halogen-based compound and a second drug containing a stabilizing compound. A combination product in this specification may be a set product or a kit product. In addition, an agent in this specification may be a composition, for example, a composition for endotoxin production inhibition or endotoxin concentration reduction.
- [15] A water treatment agent containing at least either a halogen-based compound or a stabilizing compound, where the water treatment agent is used as a combination of a halogen-based compound and a stabilizing compound when used for endotoxin production inhibition or endotoxin concentration reduction in a water system. In addition, the agent may be a water treatment composition.
- [16] A bonded halogen compound with a molecular weight of 60 or more, or a bonded halogen compound produced using at least a halogen-based compound and/or a stabilizing compound, or a use thereof, in manufacturing of or used to manufacture the agent or the combination product according to the [14] or [15], or an endotoxin production inhibitor or an endotoxin concentration reduction agent, or an endotoxin production inhibitor combination product or an endotoxin concentration reduction agent combination product.
- [17] A bonded halogen compound with a molecular weight of 60 or more, or a bonded halogen compound produced using at least a halogen-based compound and/or a stabilizing compound, or a use thereof, used for endotoxin production inhibition or endotoxin concentration reduction.
- [18] A water treatment method using the agent, the composition, the product, or the compound according to any one of the [14] to [17].

### Examples

The embodiments of the present invention will be described with reference to Examples and Comparative Examples below. However, the scope of the present invention is not limited to Examples.

### [Example 1]

### <Experimental conditions>

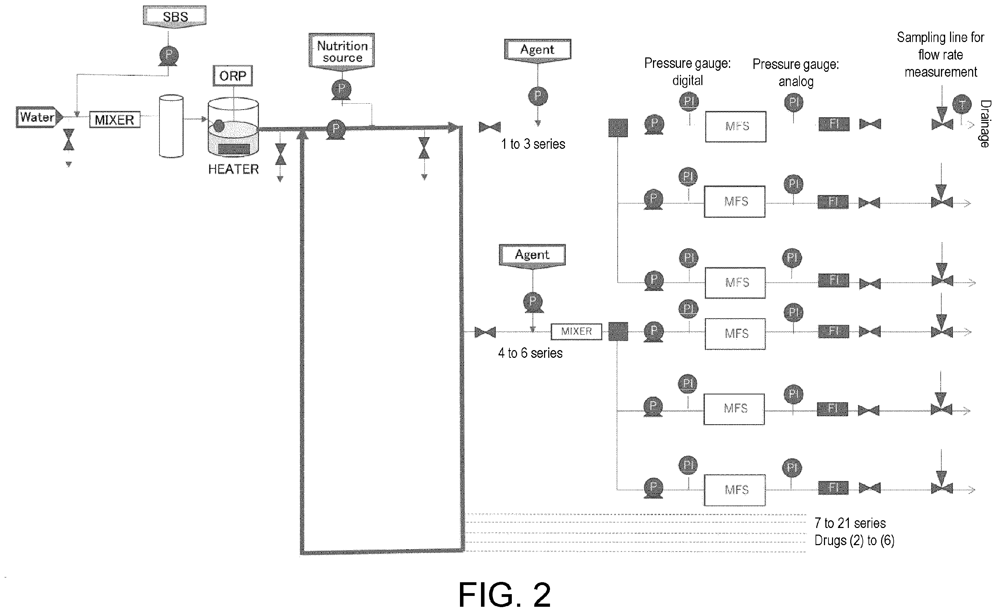

Dechlorinated tap water (raw water) to which IPA (isopropyl alcohol: 0.7 mg/L as TOC) and sodium phosphate (0.02mg/L as P) was added as a nutrition source was passed at 100 mL/min through an acrylic cell [MFS (Non-Patent Document 3)] sandwiching an RO membrane (manufactured by Nitto Denko Corporation, polyamide-based RO membrane ES20, size 20 × 2 cm) and a spacer. A slime control agent was added at a concentration capable of suppressing the differential pressure increase of the cell by 80% or more compared to Control (without drug addition), and the endotoxin concentration at the MFS cell outlet at this time was analyzed (see FIG. 2). In addition, the endotoxin concentration, the total chlorine concentration (total residual chlorine concentration), etc. in [Example 1] and [Example 2] were measured according to "1-6. Measurement methods" above.

In FIG. 2, there are a total of 21 MFS series, series 1 to 3 were without addition (Control), series 4 to 6 were "Chloramine", series 7 to 9 were DBNPA, series 10 to 12 were Cl-MIT, series 13 to 15 were chlorosulfamic acid, series 16 to 18 were chlorosulfamic acid + Cl-MIT, and series 19 to 21 were not implemented.

In addition, the test apparatus for [Example 2] to be described later used the same apparatus as [Example 1], series 1 to 3 were Control, series 4 to 6 were MIT=Cl-MIT 1.2mg/L with continuous addition, series 7 to 9 were ClSul=chlorosulfamic acid 5.2mg/L with continuous addition, and series 10 to 12 were MIT-ClSul=Cl-MIT 1.2mg/L with continuous addition + chlorosulfamic acid 65mg/L with 0.5h/d addition.

The water to be treated was pressurized by a pump and supplied to the MFS as feed water (water volume: 100 mL/min, water pressure: 0.2 MPa, water temperature: 25°C) to perform a RO membrane treatment. In addition, for the MFS used in [Example 1], the flow rate was 100 mL/min per cell. The pH of the water to be treated was 5 to 9.

### <Preparation of drug containing sodium monochlorosulfamic acid>

The drug containing sodium monochlorosulfamic acid prepared according to the method described below was used as chlorosulfamic acid in [Example 1] and [Example 2]. At this time, the molar ratio of (stabilizing compound/chlorine-based compound) was 1.57.

A sodium hydroxide aqueous solution was prepared using pure water such that sodium hydroxide (manufactured by Kishida Chemical Co., Ltd.) was 48 mass%. After mixing 19.5 g of the pre-prepared sodium hydroxide aqueous solution with 7.5 g of pure water, 15.0 g of amide sulfuric acid (sulfamic acid) (manufactured by Kishida Chemical Co., Ltd.) was added and mixed. Subsequently, 58.0 g of sodium hypochlorite (manufactured by Asahi Glass Co., Ltd.) with an available chlorine concentration of 12 mass% was further added and mixed to prepare a monochlorosulfamic acid reagent. The total chlorine concentration of the present drug was 7 mass% as Cl₂.

### <Chloramine reagent composed of ammonium salt and chlorine>

A solution obtained by adding and mixing 0.38 g of ammonium sulfate (manufactured by Kishida Chemical Co., Ltd.) to 10 L of pure water, and a solution obtained by adding and mixing 3.48 g of a sodium hypochlorite solution with an available chlorine concentration of 12 mass% (manufactured by Asahi Glass Co., Ltd.) to 10 L of pure water were prepared, respectively. These were added to the test water system (water flow amount 300 mL) at an addition amount of 0.1 mL each, and mixed with a static mixer to form chloramine in the system.

### <Mixture reagent of Cl-MIT and MIT>

As a mixture reagent of 5-chloro-2-methyl-4-isothiazolin-3-one (Cl-MIT) and 2-methyl-4-isothiazolin-3-one (MIT), "KATHON WT" manufactured by Dow Chemical Japan Co., Ltd. was used. This reagent contained approximately 10.4 mass% of Cl-MIT and approximately 3.5 mass% of MIT.

### <DBNPA reagent>

DBNPA: 2,2-dibromo-3-nitrilopropionamide
Reactant A: Obtained by mixing an ammonium bromide aqueous solution and a sodium hypochlorite aqueous solution.

According to the test results in the MFS test apparatus, in the treatment with chlorosulfamic acid alone, the endotoxin concentration could be suppressed to 50% or less compared to the treatments with chloramine, DBNPA (2,2-dibromo-3-nitrilopropionamide), and Cl-MIT (5-chloro-2-methyl-4-isothiazolin-3-one) alone. In addition, in the treatment alternating chlorosulfamic acid + Cl-MIT, the endotoxin concentration could also be significantly suppressed. The endotoxin concentration of Control was 201 EU/mL.

[Table 1]

**Table 1**

| | Addition concentration mg/L | Addition time h/d | Differential pressure suppression effect vs Control | Endotoxin concentration EU/mL |
|---|---|---|---|---|
| Chloramine | 0.11 | 24 | 108% | 31.1 |
| DBNPA | 40 | 1 | 105% | 19.1 |
| Mixture of Cl-MIT-MIT | 0.06 | 24 | 86% | 15.9 |
| Chlorosulfamic acid | 1.6 | 24 | 102% | 7.48 |
| Chlorosulfamic acid +Cl-MIT | 4.5+ 0.06 | 0.5+ 23.5 | 90% | 8.68 |

| | | | | |
|---|---|---|---|---|
| The addition concentration in mg/L of chloramine and chlorosulfamic acid is "mg-Cl₂/L" (as total chlorine concentration). | | | | |

### [Example 2] Gram-negative bacteria occupancy rate in RO membrane

The <experimental conditions> of Example 2 were the same as the <experimental conditions> of Example 1, and the drug and the addition time were as follows. The measurement of bacterial flora in the RO membrane was performed as follows.
Test Example 2-1: Control: No drug addition (endotoxin concentration 201 EU/mL)
Test Example 2-2: Cl-MIT 1.2 mg/L, continuous addition
Test Example 2-3: Chlorosulfamic acid 5.2 mg-Cl₂/L, continuous addition

### <Sampling of fouling substances>

1) Remove the RO membrane and the water feed spacer from the apparatus.
2) Cut the water feed spacer and the RO membrane with a biofilm attached into a width of 1 to 2 cm and place in a sterilized 50 mL centrifuge tube.
3) Add zirconia balls and 30 ml of pure water to the centrifuge tube.
4) Close the lid and stir well with a vortex to separate the biofilm from the water feed spacer and the RO membrane.
5) Remove the water feed spacer and the RO membrane using clean tweezers. In the case where the biofilm is still attached to the water feed spacer and the RO membrane, shake off the biofilm in 10 mL of pure water separately prepared.
6) After removing all the water feed spacer and the RO membrane, add the 10 mL of pure water of the "5)" to the centrifuge tube.
7) Centrifuge under conditions of 12,000 rpm for 10 minutes.
8) For the sample with the supernatant discarded, 16S rRNA amplicon analysis was performed using <Measurement apparatus and analysis> below to measure the bacterial flora and the proportions of types of gram-negative bacteria which were many. QIIME: Blast analysis of outputted OTU; amplicon preparation from DNA extraction; change of analysis target sequence (less than 400 to 500 bp).
   - Run with 2 × 300 bp paired-end on MiSeq. • Data sorting by MID tag. • Creation of bacterial group composition and heat map using QIIME with acquired data. • DNA extraction from samples and amplicon library preparation. • Perform homology search by Blast for each OTU outputted by QIIME.

### <Measurement apparatus and analysis>

Apparatus: MiSeq(R) system (next-generation sequencer)
Calculate the bacterial flora analysis results using Qiime2 for the analysis results.
Analysis software: Qiime2/Algorithm: DADA/Database: SILVA

Using the MFS test apparatus, after performing a water flow test using MFS under the above <experimental conditions>, a biofilm attached to the RO membrane surface installed in the MFS was collected, and bacterial flora analysis was performed.

**[Table 2]**

| Table 2 | | Test Example 2-1 | Test Example 2-2 | Test Example 2-3 |
|---|---|---|---|---|
| | | Control | Cl-MIT | Chlorosulfamic acid |
| Gram-negative bacteria | | | | |
| | Cupriavidus | 26.3 | 30.2 | 4.6 |
| | Pseudomonas | 42.1 | 61.4 | 4.8 |
| | Ralstonia | 4.3 | 1.3 | 0.3 |
| | Acidovorax | 5.5 | - | 0.1 |
| | Azotobacter | 3.0 | 4.8 | 0.4 |
| | Others | 6.6 | 1.1 | 6.5 |
| Gram-positive bacteria | | 3.1 | - | 75.1 |
| Unknown | | 9.1 | 1.2 | 8.2 |
| Total (100%) | | 100 | 100 | 100 |
| Gram-negative bacteria (%) | | 87.8 | 98.8 | 16.7 |
| (Negative bacteria/[negative bacteria + positive bacteria]) (%) | | 96.6 | 100.0 | 18.2 |

As a result, as shown in FIG. 2 and Table 2, while Pseudomonas genus bacteria and Cupriavidus genus bacteria, which are gram-negative bacteria, were dominant in Control (to which the drug was not added) and in the treatment with Cl-MIT alone, Mycolicibacterium genus bacteria and Mycobacterium genus bacteria, which are gram-positive bacteria, were dominant in the treatment with ClSul alone. This indicates that the difference in the endotoxin concentration is due to the difference in bacterial flora of the biofilm caused by the applied slime inhibitor. In addition, since the number of bacteria in the raw water was 2.2 × 100,000 cfu/mL, by causing chlorosulfamic acid to exist in the water system to configuring the number of bacteria in the water system (suitably the total gram-negative bacteria number) to less than 1,000 cfu/mL to 10 cfu/mL, the number of gram-negative bacteria in the water system can be significantly suppressed, and accordingly, production inhibition or concentration reduction of endotoxin in the water system can be achieved.

### [Example 3]

### <Experimental conditions>

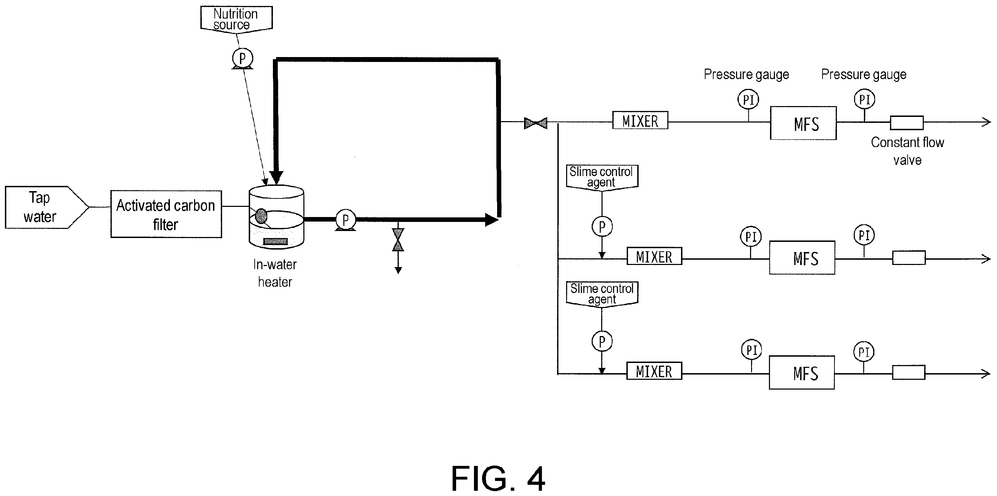

Dechlorinated tap water (raw water) to which citric acid (0.7 mg/L as TOC), ammonium chloride (0.6 mg/L as N), and sodium phosphate (0.02 mg/L as P) were added as nutrition sources was heated to 35°C with an in-water heater, and passed at 100 mL/min through an acrylic cell [MFS (Non-Patent Document 3)] sandwiching a RO membrane (manufactured by Nitto Denko Corporation, polyamide-based RO membrane ES20, size 20 × 2 cm) and a spacer. A slime control agent was added at a concentration capable of suppressing the differential pressure increase of the cell by 80% or more compared to Control (without drug addition), and the endotoxin concentration at the MFS cell outlet at this time was analyzed (see FIG. 4). The conditions (e.g., a water volume, a water pressure, a temperature, a pH, RO membrane treatment conditions, etc.) of the treated water (feed water) at this time were the same as in Example 1. In addition, the endotoxin concentration, the total chlorine concentration (total residual chlorine concentration), etc. were measured according to "1-6. Measurement methods" above.

There are a total of 3 MFS series in FIG. 4, series 1 was without addition (Control), series 2 was chlorine-based sulfamic acid compound, and series 3 was bromine-based sulfamic acid compound.

The chlorine-based sulfamic acid compound used was the same as in Examples 1 and 2, and the bromine-based sulfamic acid compound used was manufactured according to the following method. Table 1 in Example 1 shows the measurement results of the endotoxin concentration 32 days after the start of the test, and Table 3 in Example 3 shows the measurement results of the endotoxin concentration 10 days after the start of the test.

### <Preparation of bromine-based sulfamic acid compound>

The drug prepared according to the method described below was used as the bromine-based sulfamic acid compound in [Example 3]. At this time, the molar ratio of (stabilizing compound/bromine-based compound) was 1.08.

Under a nitrogen atmosphere, sodium hydroxide: 12.9 g was added to water: 51.9 g and well stirred, followed by mixing sulfamic acid: 10.7 g, liquid bromine: 16.3 g, potassium hydroxide: 8.2 g, and water: 51.9 g while cooling, to prepare a composition. The pH of the composition was 14, and the available halogen concentration (available chlorine equivalent concentration) of the composition was 7 mass% as Cl₂.

**[Table 3]**

| Table 3 | Addition concentration | Addition time | Differential pressure suppression effect | Endotoxin concentration |
|---|---|---|---|---|
| | mg/L as Cl₂ (DPD method) | h/d | vs Control | EU/mL |
| Raw water | - | - | - | 283 |
| Control | - | - | - | 251 |
| Chlorine-based sulfamic acid compound | 0.36 | Continuous | 95% | 71.2 |
| Bromine-based sulfamic acid compound | 0.36 | Continuous | 96% | 60.8 |

According to the test results in the MFS test apparatus, chlorosulfamic acid and bromosulfamic acid could suppress the discharge amount of endotoxin to be low compared to the raw water and Control. In addition, the differential pressure suppression effect and endotoxin concentration were equivalent between chlorosulfamic acid and bromosulfamic acid. The endotoxin concentration of the raw water used in Example 3 was 283 EU/mL.

According to the test results in the MFS test apparatus, chlorosulfamic acid and bromosulfamic acid in Example 3 could suppress the discharge amount of endotoxin to be low compared to the raw water and Control. In addition, the differential pressure suppression effect and endotoxin concentration suppression effect were approximately equivalent between chlorosulfamic acid and bromosulfamic acid. From this, it is thought that, similar to the chlorine-based sulfamic acid compound, the bromine-based sulfamic acid compound has the effect of reducing the proliferation or the number of microorganisms such as gram-negative bacteria that generate endotoxin.

Thus, it is thought that, by causing a bonded halogen-based compound (suitably a bonded chlorine-based compound and/or a bonded bromine-based compound) to exist in a water system, the absolute amount of gram-negative bacteria existing in the water system decreases, and the bacterial flora of bacteria attached inside the water system also changes (bacteria that are less likely to discharge endotoxin become dominant). The method for causing a bonded halogen-based compound to exist in a water system may include adding a bonded halogen-based compound, or adding a halogen-based compound and/or a stabilizing compound to the water system such that a bonded halogen-based compound is produced in the water system. Accordingly, it is thought that the endotoxin concentration can be reduced, and biofouling can be inhibited.

### Reference Signs List

1 water system, 2 reverse osmosis membrane apparatus, 3 filter, 4 solid-liquid separator, 5 condensation apparatus, 10 first drug addition apparatus; second drug addition apparatus

## Claims

1. A membrane treatment method or a biofouling inhibition method, wherein
a bonded halogen compound produced using at least a halogen-based compound and an amino compound which is a stabilizing compound is caused to exist in a water system where gram-negative bacteria exist.

2. The membrane treatment method or the biofouling inhibition method according to claim 1, wherein
a drug containing a bonded halogen compound produced using at least a halogen-based compound and an amino compound which is a stabilizing compound is added to the water system.

3. The membrane treatment method or the biofouling inhibition method according to claim 1 or 2, wherein
the bonded halogen compound is produced using a halogen-based compound and/or a stabilizing compound, in a water system containing a halogen-based compound or an amino compound derived from raw water or derived from a process.

4. The membrane treatment method or the biofouling inhibition method according to claim 1 or 2, wherein
a total halogen concentration in the water system is adjusted to 0.01 to 100 mg/L.

5. The membrane treatment method or the biofouling inhibition method according to claim 1 or 2, wherein
the bonded halogen compound is produced by adjusting a molar ratio (stabilizing compound/halogen-based compound) of the halogen-based compound and the stabilizing compound to 1.0 or more.

6. The membrane treatment method or the biofouling inhibition method according to claim 1 or 2, wherein
the bonded halogen compound is caused to exist based on an existence ratio of gram-negative bacteria in bacterial flora in the water system and/or the number of bacteria in the water system.

7. The membrane treatment method or the biofouling inhibition method according to claim 1 or 2, wherein
the bonded halogen compound is caused to exist in the water system in a case where an existence ratio of gram-negative bacteria in bacterial flora in the water system is equal to or greater than a specific value, and the specific value is set within a range of 60% to 10%.

8. The membrane treatment method or the biofouling inhibition method according to claim 1 or 2, wherein
the bonded halogen compound is caused to exist in the water system in a case where the number of bacteria in the water system is equal to or greater than a specific value, and the specific value is set within a range of 1,000 cfu/mL to 10 cfu/mL.

9. The membrane treatment method or the biofouling inhibition method according to claim 1 or 2, wherein
the water system takes, as an indicator, at least one selected from gram-negative bacteria of Pseudomonas genus bacteria, Cupriavidus genus bacteria, Methyloversatilis genus bacteria, Sphingopyxis genus bacteria, Rhizobacter genus bacteria, Novosphingobium genus bacteria, Xanthobacteraceae genus bacteria, Berkiella genus bacteria, Neochlamydia genus bacteria, Legionella genus bacteria, Vermiphilaceae genus bacteria, Sphingomonas genus bacteria, Phenylobacterium genus bacteria, Nannocystis genus bacteria, Bradyrhizobium genus bacteria, and Hyphomicrobium genus bacteria, and the bonded halogen compound is caused to exist in a case where the indicator exists.

10. The membrane treatment method or the biofouling inhibition method according to claim 1 or 2, wherein
the water system takes Pseudomonas genus bacteria and/or Cupriavidus genus bacteria as an indicator, and the bonded halogen compound is caused to exist in a case where the indicator exists.

11. The membrane treatment method or the biofouling inhibition method according to claim 1 or 2, wherein
production of endotoxin in the water system is inhibited using the bonded halogen compound.

12. The membrane treatment method or the biofouling inhibition method according to claim 1 or 2, wherein
the water system is a water system comprising a water treatment system provided with a membrane treatment apparatus.

13. An endotoxin production inhibition method in a water system, wherein
a bonded halogen compound produced using at least a halogen-based compound and an amino compound which is a stabilizing compound is caused to exist in the water system.
